# EUROPEAN PATENT APPLICATION

(11) **EP 4 404 392 A1**
(43) Date of publication of application: **24.07.2024**
(21) Application number: 22869346.1
(22) Date of filing: 15.09.2022
(51) Int. Cl.: H01R 13/40, H01R 13/03, H01R 13/11, B60L 53/16

(54) **CHARGING SEAT FOR HIGH-PRECISION TERMINAL CENTERING AND MOTOR VEHICLE**

(30) Priority: 15.09.2021 CN 202111083188; 15.09.2021 CN 202122236573 U
(71) Applicant: Changchun Jetty Automotive Technology Co., Ltd., Changchun, Jilin 130000 (CN)
(72) Inventor: WANG, Chao, Changchun, Jilin 130000 (CN)
(74) Representative: Habermann, Hruschka & Schnabel
(86) International application number: PCT/CN2022/119085
(87) International publication number: WO 2023/040978

(57) **Abstract**

The present disclosure provides a charging socket for high-precision centering of a terminal and a motor vehicle. The charging socket is provided with a cavity for accommodating a charging terminal, a gap is provided between an inner peripheral wall of the cavity and an outer peripheral wall of the charging terminal, a supporting elastic sheet is disposed in the gap, and the supporting elastic sheet is provided in a peripheral direction of the charging terminal and configured to restrict an axis of the charging terminal from deviating from an axis of the cavity. According to the charging socket in the present disclosure, mating plugging terminals may be automatically centered at a high precision, so that the mating plugging terminals can be completely plugged and contacted, thereby reducing a contact resistance between the charging terminal and the mating plug-in terminal, improving the electrical performance of the charging socket, reducing a risk of fire and combustion of the charging socket during charging, and prolonging a service life of the charging socket.

## Description

### RELATED APPLICATION

The present disclosure claims priority to Chinese Patent Application NO. 202111083188.7, entitled 'charging socket for high-precision centering of terminal and motor vehicle', and filed on September 15, 2021, which is hereby incorporated by reference in its entirety.

### TECHNICAL FIELD

The present disclosure relates to the technical field of charging, and particularly to a charging socket for high-precision centering of a terminal and a motor vehicle.

### BACKGROUND

With the increasing popularity of new energy automobiles, there are more and more matched charging devices and apparatuses. However, accidents such as fire and spontaneous combustion occur constantly in a charging process or discharging process of the existing new energy automobiles, and most of the fires in the charging and discharging process are caused by the excessive temperature rise in a process of electric energy transmission. The reason for the excessive temperature rise is that the contact resistance between mating plugging terminals of a charging device is too large, and the charging current is also very large, which causes a sharp temperature rise at the contact position of the terminals, and eventually the whole charging system catches fire and burns.

At present, the charging terminal of the charging socket in the market is generally a female terminal. In order to facilitate the mounting during assembly and have a shaking margin to adapt to plugging of a male terminal at a mating end, there is a gap between the charging terminal in the charging socket and a mounting sidewall. After the charging terminal in the charging socket is plugged with the male terminal at the mating end, it is easy to cause a small contact area and a too large contact resistance between the terminals due to non-concentricity thereof, so that the temperature rise between the terminals is too high and eventually a fire is caused.

Therefore, in the technical field of charging, there is an urgent need for a charging socket that can automatically center mating plugging terminals with high precision, so that the plug-in terminal can be completely plugged and contacted.

### SUMMARY

The present disclosure aims to provide a charging socket for high-precision centering of terminal, which can automatically center mating plugging terminals with high precision, so that the mating plug-in terminals can be completely plugged and contacted, thereby decreasing a contact resistance of the mating plugging terminals, improving an electrical performance of the charging socket, reducing a risk of fire and combustion of the charging socket during charging, and prolonging a service life of the charging socket.

The objective of the present disclosure may be achieved by adopting the following technical solutions.

A charging socket for high-precision centering of a terminal, and the charging socket is provided with a cavity for accommodating a charging terminal, a gap is provided between an inner peripheral wall of the cavity and an outer peripheral wall of the charging terminal, a supporting elastic sheet is disposed in the gap, and the supporting elastic sheet is provided in a peripheral direction of the charging terminal and configured to restrict an axis of the charging terminal from deviating from an axis of the cavity.

The present disclosure further provides a motor vehicle, including the above charging socket for high-precision centering of a terminal.

The present disclosure has the following characteristics and advantages:
1. In the charging socket, the supporting elastic sheets are provided in the peripheral direction of the charging terminal to support the charging terminal to be located in a center of the cavity of the charging socket, so that a mating plug-in terminal may be directly and completely plugged and contacted with the charging terminal during plugging, and no axis deviation occurs during use. As a result, the mating plug-in terminal may be completely plugged and contacted, thereby decreasing a contact resistance of the mating plugging terminals, improving an electrical performance of the charging socket, reducing a risk of fire and combustion of the charging socket during charging, and prolonging a service life of the charging socket.
2. In the charging socket, the supporting elastic sheets are provided on the charging terminal in the peripheral direction and uniformly disposed, so that the charging terminal may be stably fixed in the center of the cavity. In addition, an outer peripheral maximum diameter of the supporting elastic sheet is greater than an inner diameter of the cavity, so that the supporting elastic sheet applies a pressure to the inner peripheral wall of the cavity, and the charging terminal may also be ensured to be located in the center of the cavity during plugging.
3. In the charging socket, the supporting elastic sheet has various styles, cross-sectional shapes, metal materials and connection manners, which extends the selection range for designers and adds many corresponding selection and design schemes under different use environments.
4. In the charging socket, the supporting elastic sheet and/or elastic sheet is provided with a plating layer, which may improve the corrosion resistance of the charging terminal and the abrasion resistance of the contact point, and prolong the service life of the charging socket.

### BRIEF DESCRIPTION OF THE DRAWINGS

In order to more clearly illustrate the technical solutions in the embodiments of the present disclosure, the drawings to be used in the illustration of the embodiments will be briefly introduced as follows. Obviously, the drawings used in the following description only illustrate some embodiments of the present disclosure, and those of ordinary skill in the art may obtain other drawings from them without paying any inventive labor.
FIG. 1 illustrates a structural diagram of a charging socket according to an embodiment of the present disclosure;
FIG. 2 illustrates a structural diagram of a charging terminal according to an embodiment of the present disclosure;
FIG. 3 illustrates a structural diagram of a radial cross-section of a charging terminal in the present disclosure;
FIGS. 4 to 13 illustrate diagram of cross-sectional of a charging socket according to several other embodiments of the present disclosure;
FIG. 14 illustrates a structural diagram of a radial cross-section of a charging terminal according to another embodiment of the present disclosure; and
FIG. 15 illustrates a structural diagram of a charging socket according to another embodiment of the present disclosure.

### [Reference numerals]

- 1:: charging socket;
- 11:: cavity;
- 2:: charging terminal;
- 21:: terminal body;
- 22:: elastic sheet;
- 23:: plugging hole;
- 3:: supporting elastic sheet;
- 31:: elastic sleeve;
- 4:: circular ring.

### DESCRIPTION OF THE EMBODIMENTS

The technical solutions according to the embodiments of the present disclosure will be clearly and completely illustrated below in conjunction with the drawings for the embodiments of the present disclosure. Obviously, those illustrated are merely part, rather than all, of the embodiments of the present disclosure. Based on the embodiments of the present disclosure, any other embodiment obtained by those of ordinary skill in the art without paying any inventive labor should fall within the protection scope of the present disclosure.

### Embodiment 1

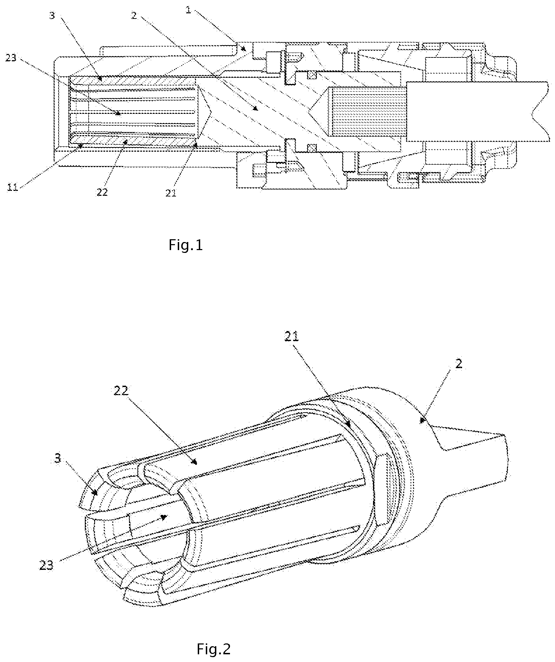

The present disclosure provides a charging socket 1 for high-precision centering of a terminal. As illustrated in FIGS. 1 to 3, the charging socket 1 is provided with a cavity 11 for accommodating a charging terminal 2; a gap is provided between an inner peripheral wall of the cavity 11 and an outer peripheral wall of the charging terminal 2; and a supporting elastic sheet 3 is disposed in the gap, the supporting elastic sheet 3 is provided in a peripheral direction of the charging terminal 2 and configured to restrict an axis of the charging terminal 2 from deviating from an axis of the cavity 11. In the charging socket 1, the supporting elastic sheets 3 are provided in the peripheral direction of the charging terminal 2 to support the charging terminal 2 to be located in a center of the cavity of the charging socket 1, so that a mating plug-in terminal may be directly and completely plugged and contacted with the charging terminal 2 during plugging, and no axis deviation occurs during use. As a result, the mating plug-in terminals may be completely plugged and contacted, thereby decreasing a contact resistance of the mating plugging terminals, improving an electrical performance of the charging socket 1, reducing a risk of fire and combustion of the charging socket 1 during charging, and prolonging a service life of the charging socket 1.

In some embodiments, a ratio of a maximum width of the gap to a maximum diameter of the charging terminal 2 is in a range from 0.01 to 0.7. When the range of the ratio of the maximum width of the gap to the maximum diameter of the charging terminal 2 is too small, the movement space of the charging terminal 2 in the gap is small, and in a case where the mating plug-in terminal is eccentric, the charging terminal 2 may be easily scratched, resulting in the increase of the contact resistance and the temperature rise. When the range of the ratio of the maximum width of the gap to the maximum diameter of the charging terminal 2 is too large, the movement space of the charging terminal 2 in the gap is too large, the charging terminal 2 and the mating plug-in terminal may be obliquely plugged with each other, and the contact area decreases, which also increases the temperature at the plugging position and the contact resistance, resulting in the temperature rise of the charging socket.

In order to verify the influence of the ratio of the maximum width of the gap to the maximum diameter of the charging terminal 2 on the temperature rise of the charging terminal 2, the inventor selects the charging terminals 2 of the same size and the charging sockets 1 with different ratio of the maximum width of the gap to the maximum diameter of the charging terminal 2, and conducts 1000 times of mating plugging experiments with the mating plugging charging gun head to test the contact resistance and the temperature rise at the contact position of the charging terminal 2 and the plugging terminal, as recorded in Table 1.

The test method of the contact resistance refers to adopt a micro-resistance measuring instrument, and one end of a measuring end of the micro-resistance measuring instrument is placed on the mating plug-in terminal and another end of the measuring end is placed on the charging terminal 2, with the same position for each measurement, and then read the value of the contact resistance displayed by the micro-resistance measuring instrument. In this embodiment, the contact resistance greater than 1 mΩ is unqualified.

The test method of the temperature rise refers to adopt a precise temperature sensor, which is tightly attached to the charging terminal 2, and when necessary, heat-conducting silicone grease is coated on the adhering face to make the temperature measurement more accurate. Next, a temperature value displayed by the precision temperature sensor under the charging terminal 2 in a non-working state is read, and the charging terminal 2 is plugged with the mating plug-in terminal and then electrified; after the temperature of the charging terminal 2 is stable, a temperature value displayed by the precision temperature sensor under the charging terminal 2 in a working state is read, and a difference between the above two temperature values is taken to obtain an absolute value as the temperature rise of the charging terminal 2. In this embodiment, the temperature rise less than 10K is a qualified value. The experimental results are shown in Table 1.

**Table 1: Influence of the ratio of the maximum width of the gap to the maximum diameter of the charging terminal 2 on the temperature rise of the charging terminal 2**

| Ratio of the maximum width of the gap to the maximum diameter of the charging terminal 2 | | | | | | | | | | | | | |
|---|---|---|---|---|---|---|---|---|---|---|---|---|---|
| 0.002 | 0.005 | 0.01 | 0.02 | 0.05 | 0.1 | 0.2 | 0.3 | 0.4 | 0.5 | 0.6 | 0.7 | 0.8 | 0.9 |

| Contact resistance between the mating plug-in terminal and the charging terminal (mΩ) | | | | | | | | | | | | | |
|---|---|---|---|---|---|---|---|---|---|---|---|---|---|
| 1.21 | 1.16 | 0.92 | 0.70 | 0.73 | 0.77 | 0.80 | 0.83 | 0.87 | 0.90 | 0.94 | 0.97 | 1.21 | 1.03 |

| Temperature rise of the charging terminal 2 (K) | | | | | | | | | | | | | |
|---|---|---|---|---|---|---|---|---|---|---|---|---|---|
| 11.4 | 10.2 | 1.9 | 2.5 | 3.7 | 4.6 | 5.3 | 6.9 | 7.6 | 8.1 | 8.9 | 9.6 | 12.1 | 12.8 |

As shown in Table 1, when the ratio of the maximum width of the gap to the maximum diameter of the charging terminal 2 is less than 0.01, the contact resistance between the mating plug-in terminal and the charging terminal 2 is greater than 1 mQ, which is too large, and the temperature rise of the charging terminal 2 exceeds 10 K; when the ratio of the maximum width of the gap to the maximum diameter of the charging terminal 2 is greater than 0.7, the contact resistance between the mating plug-in terminal and the charging terminal 2 is greater than 1 mQ, which is too large, and the temperature rise of the charging terminal 2 exceeds 10K, both of which lead to the temperature rise of the charging socket 1 and even a combustion accident in severe cases. Therefore, the inventor selects the ratio of the maximum width of the gap to the maximum diameter of the charging terminal 2 to be within a range of 0.01 to 0.7 and exemplarily 0.05 to 0.5.

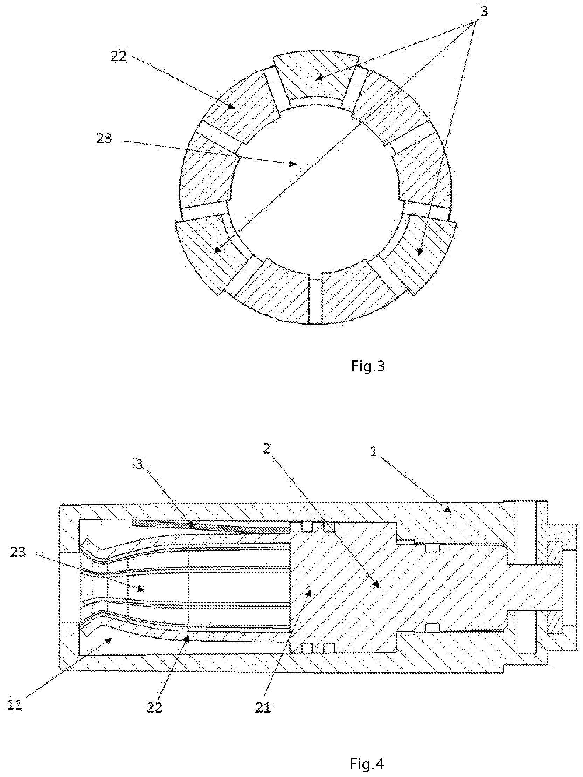

In some embodiments, as illustrated in FIG. 4, the supporting elastic sheet 3 is shaped as a straight-line segment, one end of the straight-line segment is connected to the inner peripheral wall of the cavity 11, and the other end of the straight-line segment is connected to the charging terminal 2. The supporting elastic sheet 3 shaped as the straight-line segment is easy to be machined and simple to be formed, and the supporting elastic sheet 3 has a large of deformation after contacting the inner wall of the cavity 11, so that a greater force may be applied to the inner wall of the cavity 11 and the charging terminal 2 may be better centered. However, during assembly with the inner wall of the cavity 11, the stretched supporting elastic sheet 3 shaped as the straight-line segment needs to be withdrawn before assembly, and the elastic force of the supporting elastic sheet 3 will be affected.

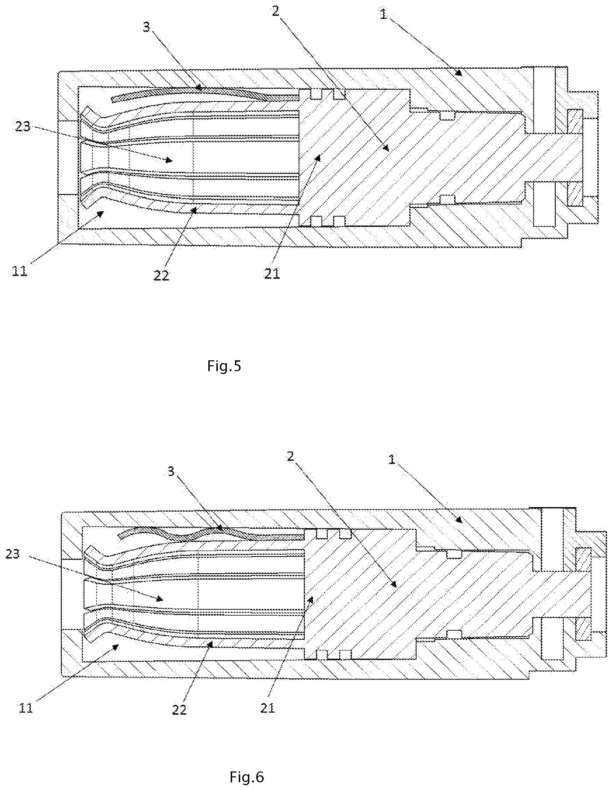

In some embodiments, as illustrated in FIG. 5, the supporting elastic sheet 3 is shaped as an arc segment, one end of the arc segment is connected to the inner peripheral wall of the cavity or the charging terminal, and a tangent part of the arc segment is connected to the charging terminal 2 or the inner peripheral wall of the cavity 11. The supporting elastic sheet 3 shaped as the arc segment has a front end with a small diameter to achieve a guiding effect during assembly with the inner wall of the cavity 11, so as to prevent the front end of the supporting elastic sheet 3 from damaging the inner wall of the cavity 11.

In some embodiments, as illustrated in FIG. 6, the supporting elastic sheet 3 is shaped as a curved segment, one end of the curved segment is connected to the inner peripheral wall of the cavity or the charging terminal, and a portion of an outermost side of the curved segment is connected to the charging terminal 2 or the inner peripheral wall of the cavity 11. The supporting elastic sheet 3 shaped as the curved segment may contact the inner peripheral wall of the cavity 11 at multiple points to form a stable supporting structure, so that the charging terminal 2 may be better centered. Moreover, the supporting elastic sheet 3 shaped as the curved segment also has a front end with a small diameter to achieve a guiding effect, so that the assembly with the inner wall of the cavity 11 may be easier.

In some embodiments, the supporting elastic sheet 3 is disposed on the charging terminal 2 or the inner peripheral wall of the cavity 11, and a middle part of the supporting elastic sheet 3 protrudes and contacts the charging terminal 2 or the inner peripheral wall of the cavity 11.

In some embodiments, a cross-sectional of the supporting elastic sheet 3 in a radial direction of the charging terminal 2 is circular or elliptical or polygonal or flat or E-shaped or F-shaped or H-shaped or K-shaped or L-shaped or T-shaped or U-shaped or V-shaped or W-shaped or X-shaped or Y-shaped or Z-shaped or semi-arc-shaped or arc-shaped or wavy. The supporting elastic sheet 3 has various cross-sectional shapes, which extends the selection range for designers and adds many corresponding selection and design schemes under different use environments.

In some embodiments, the number of the supporting elastic sheets 3 is at least three.

In some embodiments, the supporting elastic sheets 3 are uniformly provided in the peripheral direction of the charging terminal 2, which can apply a uniform pressure to the inner peripheral wall of the cavity 11 and ensure the charging terminal 2 to be located in the center of the cavity 11 during plugging.

In some embodiments, an inner peripheral minimum diameter of the supporting elastic sheet 3 in a normal state is less than or equal to a minimum outer diameter of the charging terminal 2. The normal state of the supporting elastic sheet 3 refers to a relaxed state before assembly, and the inner peripheral minimum diameter thereof is less than or equal to the minimum outer diameter of the charging terminal 2.

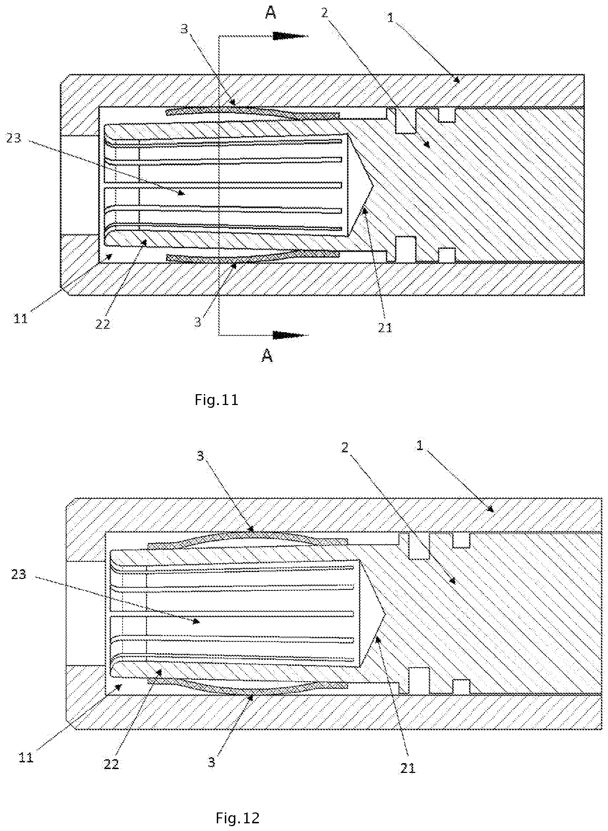

In some embodiments, as illustrated in FIG. 12, the supporting elastic sheet 3 is in contact with the charging terminal 2 and applies a pressure of 0.5 N to 95 N to the charging terminal.

In order to verify the influence of the pressure applied to the charging terminal 2 by the supporting elastic sheet 3 on the contact resistance and the plugging and unplugging conditions after the plugging of the mating plugging terminals with a large eccentricity, the inventor selects the charging socket 1 and the charging terminal 2 with the same size, and different pressures applied to the charging terminal 2 by the supporting elastic sheets 3. Then, the inventor selects the mating plug-in terminal with the same eccentricity to be plugged with the charging terminal 2, and tests the contact resistance between the terminals which have been mating plugged as well as the plugging success rate of the mating plug-in terminal in multiple plugging and unplugging experiments. The test results are shown in Table 2.

The test method of the contact resistance refers to adopt a micro-resistance measuring instrument, and one end of a measuring end of the micro-resistance measuring instrument is placed on the mating plug-in terminal and another end of the measuring end is placed on the charging terminal 2, with the same position for each measurement, and then read the value of the contact resistance displayed on the micro-resistance measuring instrument. In this embodiment, the contact resistance greater than 1 mQ is unqualified.

The test method of the plugging success rate refers to that each kind of charging terminals 2 of different pressures applied to the charging terminal 2 by the supporting elastic sheets 3 is plugged with 100 mating plug-in terminals with the same eccentricity, record the number of successful one-time plugging, take a ratio of the above number to a total number of plugging and multiply the ratio by 100%. In this embodiment, the plugging success rate less than 95% is unqualified.

**Table 2: Influence of different pressures on the contact resistance and the plugging success rate**

| Pressure applied by the supporting elastic sheet to the charging terminal 2 (N) | | | | | | | | | | | |
|---|---|---|---|---|---|---|---|---|---|---|---|
| 0.1 | 0.3 | 0.5 | 1 | 5 | 15 | 35 | 55 | 75 | 95 | 105 | 115 |

| Contact resistance between the mating plug-in terminal and the charging terminal (mΩ) | | | | | | | | | | | |
|---|---|---|---|---|---|---|---|---|---|---|---|
| 1.21 | 1.03 | 0.98 | 0.90 | 0.88 | 0.84 | 0.81 | 0.77 | 0.72 | 0.68 | 0.63 | 0.58 |

| Plugging success rate of the mating plug-in terminal and the charging terminal (%) | | | | | | | | | | | |
|---|---|---|---|---|---|---|---|---|---|---|---|
| 100 | 100 | 100 | 100 | 100 | 100 | 100 | 99 | 97 | 95 | 92 | 89 |

As can be seen from Table 2, when the pressure applied to the charging terminal 2 by the supporting elastic sheet 3 is less than 0.5 N, although the plugging success rate is qualified, the contact resistance between the mating plug-in terminal and the charging terminal 2 is greater than 1 mQ, which is too large. When the pressure applied to the charging terminal 2 by the supporting elastic sheet 3 is greater than 95 N, the plugging success rate is less than 95%, which cannot meet the application requirement. Thus, the inventor sets the pressure applied to the charging terminal 2 by the supporting elastic sheet 3 as 0.5 N to 95 N.

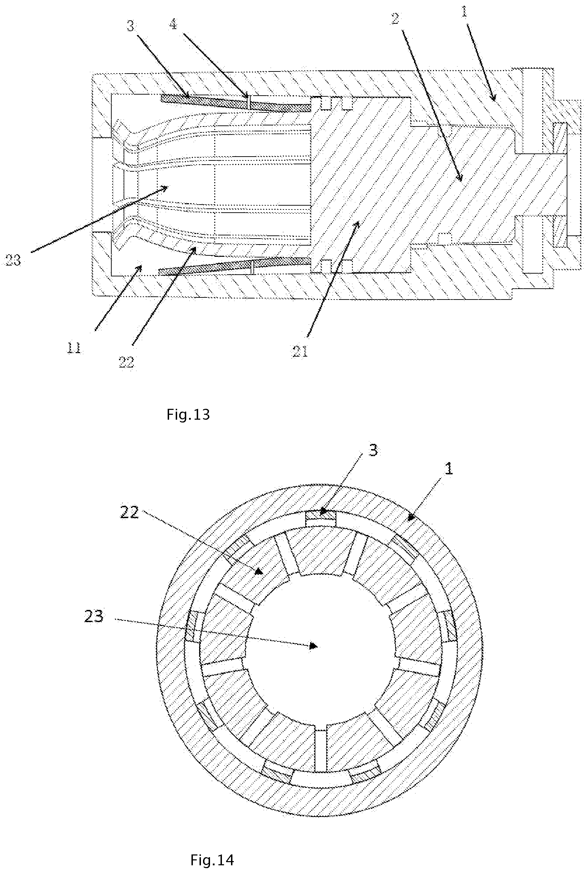

In some embodiments, as illustrated in FIG. 13, the charging socket 1 further includes a circular ring 4, and the circular ring 4 sleeves the supporting elastic sheet 3, and the circular ring 4 forms an abutting portion together with the supporting elastic sheet 3 and is fixed to the inner wall of the cavity 11. The abutting portion is located at a middle position between two ends of the supporting elastic sheet 3, and causes one end of the supporting elastic sheet 3 to contact the inner wall of the cavity 11 or the charging terminal 2 and the other end of the supporting elastic sheet 3 to contact the charging terminal 2 or the inner wall of the cavity 11, and both ends of the supporting elastic sheet 3 apply pressures to the inner wall of the cavity 11 or the charging terminal 2.

In some embodiments, as illustrated in FIG. 13, a ratio of a length from the abutting portion to the end of the supporting elastic sheet 3 away from the charging terminal 2 to a length from the abutting portion to the end of the supporting elastic sheet 3 abutted against the charging terminal 2 is 0.3 to 1.5. When the ratio is too small, the pressure applied by the supporting elastic sheet 3 to the charging terminal 2 is too small, and the effect of automatic centering is not ideal. When the ratio is too large, the pressure applied by the supporting elastic sheet 3 to the charging terminal 2 is too large, and the charging terminal 2 is fixed in the center of the cavity 11, which is difficult to cause a deviation, so that when mating plug-in terminals with different eccentricities are assembled, a mating plug-in terminal with a large eccentricity cannot be plugged.

In order to verify the influence of the ratio of the length from the abutting portion to the end of the supporting elastic sheet 3 away from the charging terminal to the length from the abutting portion to the end of the supporting elastic sheet 3 close to the charging terminal on the contact resistance and the plugging and unplugging conditions of the mating plug-in terminal with a large eccentricity after plugging, the inventor selects the charging socket 1 and the charging terminal 2 with the same size, and adopts different ratios of the length from the abutting portion to the end of the supporting elastic sheet 3 away from the charging terminal to the length from the abutting portion to the end of the supporting elastic sheet 3 abutted against the charging terminal. Then, the inventor selects the mating plug-in terminals with the same eccentricity to be plugged with the charging terminal 2, and tests the contact resistance between the terminals which have been plugged as well as the plugging success rate of the mating plug-in terminal in multiple plugging and unplugging experiments. The test results are shown in Table 3.

The test method of the contact resistance refers to adopt a micro-resistance measuring instrument, and one end of a measuring end of the micro-resistance measuring instrument is placed on the mating plug-in terminal and the other end of a measuring end is placed on the charging terminal 2, with the same position for each measurement, and then read the value of the contact resistance displayed on the micro-resistance measuring instrument. In this embodiment, the contact resistance greater than 1 mQ is unqualified.

The test method of the plugging success rate refers to that each kind of charging terminals 2 of different pressures applied to the charging terminal 2 by the supporting elastic sheets 3 is plugged with 100 mating plug-in terminals with the same eccentricity, record the number of successful one-time plugging, take a ratio of the above number to a total number of plugging and multiply the ratio by 100%. In this embodiment, the plugging success rate less than 95% is unqualified.

**Table 3: Influence of different pressures on the contact resistance and the plugging success rate**

| Ratio of the length from the abutting portion to the end of the supporting elastic sheet away from the charging terminal to the length from the abutting portion to the end of the supporting elastic sheet abutted against the charging terminal | | | | | | | | | | | |
|---|---|---|---|---|---|---|---|---|---|---|---|
| 0.05 | 0.1 | 0.2 | 0.3 | 0.5 | 0.8 | 1.0 | 1.2 | 1.4 | 1.5 | 1.6 | 1.8 |

| Contact resistance between the mating plug-in terminal and the charging terminal (mΩ) | | | | | | | | | | | |
|---|---|---|---|---|---|---|---|---|---|---|---|
| 1.21 | 1.15 | 1.06 | 0.90 | 0.88 | 0.84 | 0.81 | 0.77 | 0.72 | 0.68 | 0.63 | 0.58 |

| Plugging success rate of the mating plug-in terminal and the charging terminal (%) | | | | | | | | | | | |
|---|---|---|---|---|---|---|---|---|---|---|---|
| 100 | 100 | 100 | 100 | 100 | 100 | 100 | 99 | 97 | 95 | 92 | 89 |

As can be seen from Table 3, when the ratio of the length from the abutting portion to the end of the supporting elastic sheet 3 away from the charging terminal to the length from the abutting portion to the end of the supporting elastic sheet 3 abutted against the charging terminal is less than 0.3, although the plugging success rate is qualified, the contact resistance between the mating plug-in terminal and the charging terminal 2 is greater than 1 mΩ, which is too large. When the ratio of the length from the abutting portion to the end of the supporting elastic sheet 3 away from the charging terminal to the length from the abutting portion to the end of the supporting elastic sheet 3 abutted against the charging terminal is greater than 105, the plugging success rate is less than 95%, which cannot meet the application requirement. Thus, the inventor sets the ratio of the length from the abutting portion to the end of the supporting elastic sheet 3 away from the charging terminal to the length from the abutting portion to the end of the supporting elastic sheet 3 abutted against the charging terminal as 0.3 to 1.5.

In some embodiments, the charging terminal 2 includes a terminal body 21 and a plurality of elastic sheets 22 disposed on an end face of the terminal body 21 at intervals in the peripheral direction, and a plugging hole 23 is formed in the middle of the plurality of elastic sheets 22.

In some embodiments, an inner-hole cross-sectional area of the plugging hole 23 on a side close to the terminal body 21 is greater than an inner-hole cross-sectional area of the plugging hole on a side away from the terminal body 21, which avoids the following problem: after being plugged with the plugging hole 23, the mating plug-in terminal shakes under an external force, which causes the charging terminal 2 to be deviated and always in an eccentric state, resulting in a small contact area and too high a contact resistance between the terminals, so that the temperature rise between the terminals is excessive, thereby leading to accidents such as fire and combustion in severe cases.

In some embodiments, a thickness of the elastic sheet 22 on a side of an opening of the plugging hole 23 is greater than or equal to a thickness of the elastic sheet on a side close to the terminal body 21. If the thicknesses of the elastic sheet 22 are consistent, the elastic sheet 22 has an inner surface attached to an outer surface of the mating plug-in terminal after being plugged with the mating plug-in terminal, thereby forming a line contact with a small contact area. Therefore, the inventor increases the thickness of a front end of the elastic sheet 22, and reduces an angle inside the front end of the elastic sheet 22, so that after the mating plug-in terminal is plugged, an inner plane of the front end of the expanded elastic sheet 22 forms a face contact with the surface of the mating plug-in terminal, thereby increasing the contact area therebetween and ensuring the electrical performance of the mating plugging terminals.

In some embodiments, as illustrated in FIG. 14, a ratio of a peripheral maximum width of the supporting elastic sheet 3 to a peripheral maximum width of the elastic sheet 22 is 0.1 to 1.6. When the ratio is less than 0.1, the elasticity of the supporting elastic sheet 3 is too low, and the pressure applied to the inner peripheral wall of the cavity 11 by the supporting elastic sheet 3 is too small, which causes the charging terminal 2 to be eccentric, so that the contact area between the charging terminal 2 in the charging socket 1 and the mating plug-in terminal is small, and the contact resistance is too high. When the ratio is greater than 1.6, the elasticity of the supporting elastic sheet 3 is too high, and the pressure applied to the inner peripheral wall of the cavity 11 by the supporting elastic sheet 3 is too large, so that the charging terminal 2 is fixed in the center of the cavity 11, which is difficult to cause a deviation, so that when mating plug-in terminals with different eccentricities are assembled, a mating plug-in terminal with a large eccentricity cannot be plugged.

In order to verify the influence of the ratio of the peripheral maximum width of the supporting elastic sheet 3 to the peripheral maximum width of the elastic sheet 22 on the pressure applied by the supporting elastic sheet 3 to the inner peripheral wall of the cavity 11 and the temperature rise of the charging terminal 2, the inventor selects the charging terminals 2 with the same size and different ratios of the peripheral maximum width of the supporting elastic sheet 3 to the peripheral maximum width of the elastic sheet 22, and tests the pressure applied by the supporting elastic sheet 3 to the inner peripheral wall of the cavity 11 and the temperature rise of the charging terminal 2, which are recorded in Table 4.

The pressure measurement method refers to adopt a precision push-pull gauge, and a measuring end is abutted against a top end of the supporting elastic sheet 3, then press the supporting elastic sheet 3 to an angle which the inner peripheral wall of the cavity 11 is from an initial angle, and read a numerical value displayed on the precision push-pull gauge. In this embodiment, the pressure of 5 N to 98 N is qualified, and the temperature rise less than 10 K is qualified.

**Table 4: Influence of the ratio of the peripheral maximum width of the supporting elastic sheet 3 to the peripheral maximum width of the elastic sheet 22 on the pressure applied by the supporting elastic sheet 3 to the inner peripheral wall of the cavity 11 and the temperature rise of the charging terminal 2**

| Ratio of the peripheral maximum width of the supporting elastic sheet 3 to the peripheral maximum width of the elastic sheet 22 | | | | | | | | | | | | | |
|---|---|---|---|---|---|---|---|---|---|---|---|---|---|
| 0.01 | 0.05 | 0.1 | 0.5 | 1.0 | 1.1 | 1.2 | 1.3 | 1.4 | 1.5 | 1.6 | 1.7 | 1.8 | 1.9 |

| Pressure applied by the supporting elastic sheet 3 to the inner peripheral wall of the cavity 11 (N) | | | | | | | | | | | | | |
|---|---|---|---|---|---|---|---|---|---|---|---|---|---|
| 2 | 3 | 5 | 13 | 24 | 39 | 54 | 69 | 74 | 83 | 98 | 108 | 116 | 124 |

| Temperature rise of the charging terminal 2 (K) | | | | | | | | | | | | | |
|---|---|---|---|---|---|---|---|---|---|---|---|---|---|
| 11.4 | 10.6 | 9.9 | 9.1 | 8.2 | 7.3 | 5.9 | 4.7 | 3.1 | 2.3 | 1.9 | 1.4 | 0.9 | 0.4 |

As can be seen from Table 4, when the ratio of the peripheral maximum width of the supporting elastic sheet 3 to the peripheral maximum width of the elastic sheet 22 is greater than 1.6, the pressure applied by the supporting elastic sheet 3 to the inner peripheral wall of the cavity 11 exceeds 98 N, and at this time, the inner peripheral wall of the cavity 11 is subjected to an excessive pressure and is very easy to be damaged, and the charging terminal 2 is fixed in the center of the cavity 11, which is difficult to cause a deviation, so that when mating plug-in terminals with different eccentricities are assembled, a mating plug-in terminal with a large eccentricity cannot be plugged. When the ratio of the peripheral maximum width of the supporting elastic sheet 3 to the peripheral maximum width of the elastic sheet 22 is less than 0.1, the pressure applied by the supporting elastic sheet 3 to the inner peripheral wall of the cavity 11 is less than 5 N, which causes the charging terminal 2 to be eccentric, so that the contact area between the charging terminal 2 in the charging socket 1 and the mating plug-in terminal is small, and the contact resistance is too high. In addition, when the ratio of the peripheral maximum width of the supporting elastic sheet 3 to the peripheral maximum width of the elastic sheet 22 is less than 0.1, the temperature rise of the charging terminal 2 is greater than 10K due to the increase of the contact resistance, which leads to the temperature rise of the charging socket and even a combustion accident in severe cases. Thus, the inventor sets the ratio of the peripheral maximum width of the supporting elastic sheet 3 to the peripheral maximum width of the elastic sheet 22 as 0.1 to 1.6.

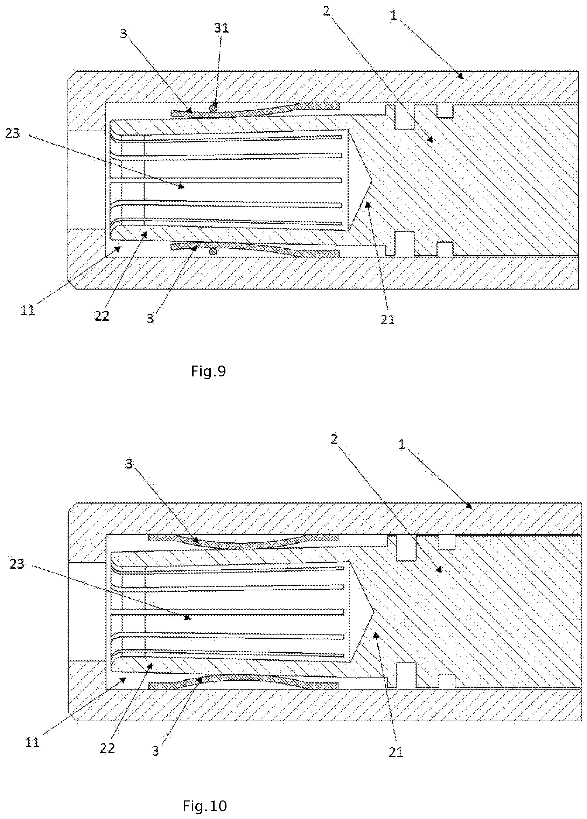

In some embodiments, as illustrated in FIG. 10, the supporting elastic sheet 3 is disposed on the inner peripheral wall of the cavity 11, and an inner peripheral minimum diameter of the supporting elastic sheet 3 is less than or equal to the minimum outer diameter of the elastic sheet 22, so that the supporting elastic sheet 3 applies a pressure to the charging terminal 2 to ensure that the charging terminal 2 can be located in the center of the cavity 11 during plugging.

In some embodiments, as illustrated in FIG. 11, the supporting elastic sheet 3 is in contact with the elastic sheet 22 and applies a pressure of 0.5 N to 9 N to the elastic sheet.

In order to verify the influence of the pressure applied by the supporting elastic sheet 3 to the elastic sheet 22 on the contact resistance and the plugging and unplugging conditions of the mating plug-in terminal with a large eccentricity after plugging, the inventor selects the charging socket 1 and the charging terminal 2 with the same size, and different pressures applied by supporting elastic sheets 3 to the elastic sheet 22. Then, the inventor selects the mating plug-in terminals with the same eccentricity to be plugged with the charging terminal 2, and tests the contact resistance between the terminals which have been plugged as well as the plugging success rate of the mating plug-in terminal in multiple plugging and unplugging experiments. The test results are shown in Table 5.

The test method of the contact resistance refers to adopt a micro-resistance measuring instrument, and one end of a measuring end of the micro-resistance measuring instrument is placed on the mating plug-in terminal and the other end of the measuring end is placed on the charging terminal 2, with the same position for each measurement, and then read the value of the contact resistance displayed on the micro-resistance measuring instrument. In this embodiment, the contact resistance greater than 1 mQ is unqualified.

The test method of the plugging success rate refers to that each kind of charging terminals of different pressures applied to the charging terminal 2 by the supporting elastic sheets 3 is plugged with 100 mating plug-in terminals with the same eccentricity, record the number of successful one-time plugging, take a ratio of the above number to a total number of plugging and multiply the ratio by 100%. In this embodiment, the plugging success rate less than 95% is unqualified.

**Table 5: Influence of different pressures on the contact resistance and the plugging success rate**

| Pressure applied by the supporting elastic sheet to the elastic sheet (N) | | | | | | | | | | | |
|---|---|---|---|---|---|---|---|---|---|---|---|
| 0.1 | 0.3 | 0.5 | 1 | 5 | 15 | 35 | 55 | 75 | 95 | 105 | 115 |

| Contact resistance between the mating plug-in terminal and the charging terminal (mΩ) | | | | | | | | | | | |
|---|---|---|---|---|---|---|---|---|---|---|---|
| 1.21 | 1.03 | 0.98 | 0.90 | 0.88 | 0.84 | 0.81 | 0.77 | 0.72 | 0.68 | 0.63 | 0.58 |

| Plugging success rate of the mating plug-in terminal and the charging terminal (%) | | | | | | | | | | | |
|---|---|---|---|---|---|---|---|---|---|---|---|
| 100 | 100 | 100 | 100 | 100 | 100 | 100 | 99 | 97 | 95 | 92 | 89 |

As can be seen from Table 5, when the pressure applied by the supporting elastic sheet 3 to the elastic sheet 22 is less than 0.5N, although the plugging success rate is qualified, the contact resistance between the mating plug-in terminal and the charging terminal 2 is greater than 1 mQ, which is too large. When the pressure applied by the supporting elastic sheet 3 to the elastic sheet 22 is greater than 95 N, the plugging success rate is less than 95%, which cannot meet the application requirement. Therefore, the inventor sets the pressure applied by the supporting elastic sheet 3 to the elastic sheet 22 as 0.5 N to 95 N.

In some embodiments, the supporting elastic sheet 3 is provided on the inner peripheral wall of the cavity 11 by one or more manners selected from ultrasonic welding, laser welding, electron beam welding, hot pressing welding, threaded connection, crimping, clamping, splicing and adhesion.

In some embodiments, a groove is disposed on an outer periphery of the supporting elastic sheet 3; and the charging socket 1 further includes an elastic sleeve 31, and the elastic sleeve 31 is configured to sleeve the groove, as illustrated in FIG. 9. The elastic sleeve 31 may prevent the end of the supporting elastic sheet 3 from scratching the surface of the charging terminal 2. In addition, when the elasticity of the supporting elastic sheet 3 is insufficient to meet the pressure applied to the charging terminal 2, the elastic sleeve 31 may provide an additional contraction force to increase the pressure applied by the supporting elastic sheet 3 to the charging terminal 2.

In some embodiments, the elastic sleeve 31 is an elastic rubber ring or a spring ring.

In some embodiments, the supporting elastic sheet 3 is integrally formed with the charging terminal 2. And the integrally formation has a high design strength, and it is important that centralized machining may be performed before assembly, thereby greatly improving the assembly efficiency.

In some embodiments, the supporting elastic sheets 3 are disposed on the end face of the terminal body 21 and provided at intervals in the middle of the elastic sheets 22. By disposing the supporting elastic sheets 3 on the end face of the terminal body 21, the machining is simple, and it is possible to support the charging terminal to be in the center of the cavity of the charging socket, so that a mating plug-in terminal can be directly and completely plugged and contacted with the charging terminal 2 during plugging, and no axis deviation occurs, thereby decreasing the contact resistance of the mating plug-in terminal, and improving the electrical performance of the charging socket 1.

In some embodiments, the supporting elastic sheets 3 are provided on the terminal body 21 by one or more manners selected from resistance welding, friction welding, ultrasonic welding, arc welding, laser welding, electron beam welding, pressure diffusion welding, magnetic induction welding, threaded connection, crimping, clamping, splicing and adhesion.

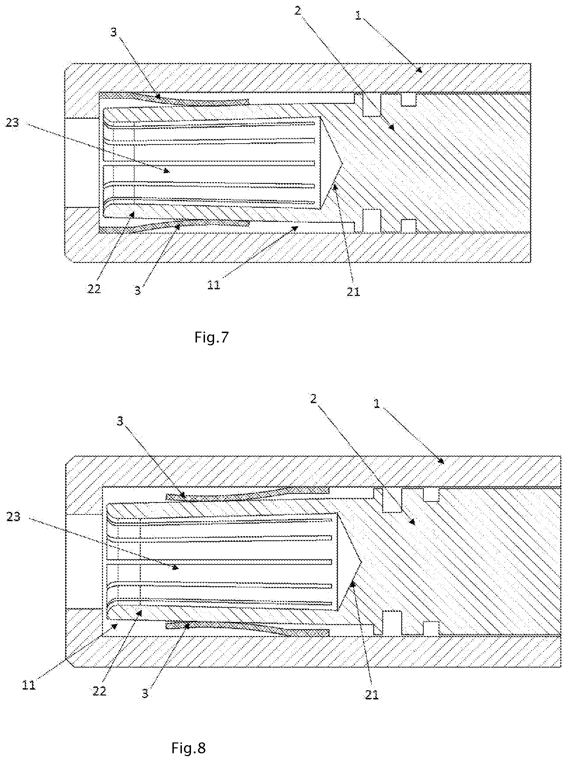

In some embodiments, as illustrated in FIG. 7, one end of the supporting elastic sheet 3 is disposed on an outer periphery of the elastic sheet 22, and the other end of the supporting elastic sheet 3 is in contact with the inner peripheral wall of the cavity 11. After the mating plug-in terminal is inserted, the supporting elastic sheet 3 is in contact with the inner wall of the cavity 11 and largely deformed, so that a greater force may be applied to the inner wall of the cavity 11, and the charging terminal 2 may be better centered.

In some embodiments, a maximum outer diameter of the supporting elastic sheet 3 in a normal state is greater than or equal to a maximum outer diameter of the inner peripheral wall of the cavity 11. The normal state of the supporting elastic sheet 3 refers to a relaxed state before assembly, and a maximum outer diameter thereof is greater than or equal to the maximum outer diameter of the inner peripheral wall of the cavity 11 in an unstressed state. After assembly, the supporting elastic sheet 3 is compressed, which can apply a pressure to the inner peripheral wall of the cavity 11.

In some embodiments, as illustrated in FIG. 8, both ends of the supporting elastic sheet 3 are disposed on the outer periphery of the elastic sheet 22, and a middle part of the supporting elastic sheet 3 protrudes and contacts the inner peripheral wall of the cavity 11. Since the middle of the supporting elastic sheet 3 protrudes, a more uniform pressure may be applied to the cavity 11 and achieve a good resilience, so that the mating plug-in terminal and the charging terminal 2 are better coaxial after plugging.

In some embodiments, a maximum outer diameter of the supporting elastic sheet 3 in a normal state is greater than or equal to a maximum outer diameter of the inner peripheral wall of the cavity 11. The normal state of the supporting elastic sheet 3 refers to a relaxed state before assembly, and a maximum outer diameter thereof is greater than or equal to the maximum outer diameter of the inner peripheral wall of the cavity 11 in an unstressed state. After assembly, the supporting elastic sheet 3 is compressed, which can apply a pressure to the inner peripheral wall of the cavity 11.

In some embodiments, the supporting elastic sheet 3 is in contact with the inner peripheral wall of the cavity 11 and applies a pressure of 0.5 N to 100 N to the inner peripheral wall of the cavity 11. When the pressure applied by the supporting elastic sheet 3 to the inner peripheral wall of the cavity 11 is too small, there are still the phenomena that the charging terminal 2 is eccentric, the contact area between the charging terminal 2 in the charging socket 1 and the mating plug-in terminal is small, and the contact resistance is too high. When the pressure applied by the supporting elastic sheet 3 to the inner peripheral wall of the cavity 11 is too large, the charging terminal 2 is fixed in the center of the cavity 11, which is difficult to cause a deviation, so that when mating plug-in terminals with different eccentricities are assembled, a mating plug-in terminal with a large eccentricity cannot be plugged.

In order to verify the influence of the pressure applied by the supporting elastic sheet 3 to the inner peripheral wall of the cavity 11 on the contact resistance and the plugging and unplugging conditions of the mating plug-in terminal with a large eccentricity, the inventor selects the charging socket 1 and the charging terminal 2 with the same size, and different pressures applied by supporting elastic sheets 3 to the inner peripheral wall of the cavity 11. Then, the inventor selects the mating plug-in terminal with the same eccentricity to be plugged with the charging terminal 2, and tests the contact resistance between the terminals which have been plugged as well as the plugging success rate of the mating plug-in terminal in multiple plugging and unplugging experiments. The test results are shown in Table 6.

The test method of the contact resistance refers to adopt a micro-resistance measuring instrument, and one end of a measuring end of the micro-resistance measuring instrument is placed on the mating plug-in terminal and the other end of the measuring end is placed on the charging terminal 2, with the same position for each measurement, and then read the value of the contact resistance on the micro-resistance measuring instrument. In this embodiment, the contact resistance greater than 1 mQ is unqualified.

The test method of the plugging success rate refers to that each kind of charging terminals 2 of different pressures applied to the inner peripheral wall of the cavity 11 by the supporting elastic sheets 3 is plugged with 100 mating plug-in terminals with the same eccentricity, record the number of successful one-time plugging, take a ratio of the above number to a total number of plugging and multiply the ratio by 100%. In this embodiment, the plugging success rate less than 95% is unqualified.

**Table 6: Influence of different pressures on the contact resistance and the plugging success rate**

| Pressure applied by the supporting elastic sheet to the inner peripheral wall of the cavity (N) | | | | | | | | | | | |
|---|---|---|---|---|---|---|---|---|---|---|---|
| 0.1 | 0.3 | 0.5 | 1 | 5 | 15 | 35 | 55 | 80 | 100 | 110 | 120 |

| Contact resistance between the mating plug-in terminal and the charging terminal (mΩ) | | | | | | | | | | | |
|---|---|---|---|---|---|---|---|---|---|---|---|
| 1.21 | 1.03 | 0.98 | 0.90 | 0.88 | 0.84 | 0.81 | 0.77 | 0.72 | 0.68 | 0.63 | 0.58 |

| Plugging success rate of the mating plug-in terminal and the charging terminal (%) | | | | | | | | | | | |
|---|---|---|---|---|---|---|---|---|---|---|---|
| 100 | 100 | 100 | 100 | 100 | 100 | 100 | 99 | 97 | 95 | 92 | 89 |

As can be seen from Table 6, when the pressure applied by the supporting elastic sheet 3 to the inner peripheral wall of the cavity 11 is less than 0.5 N, although the plugging success rate is qualified, the contact resistance between the mating plug-in terminal and the charging terminal 2 is greater than 1 mQ, which is too large. When the pressure applied by the supporting elastic sheet 3 to the inner peripheral wall of the cavity 11 is greater than 100 N, the plugging success rate is less than 95%, which cannot meet the application requirement. Therefore, the inventor sets the pressure applied by the supporting elastic sheet 3 to the inner peripheral wall of the cavity 11 as 0.5 N to 100 N.

In some embodiments, the supporting elastic sheet 3 is disposed on the elastic sheet 22 by one or more manners selected from resistance welding, friction welding, ultrasonic welding, arc welding, laser welding, electron beam welding, pressure diffusion welding, magnetic induction welding, threaded connection, crimping, clamping, splicing and adhesion.

The ultrasonic welding is to transmit high-frequency vibration waves to the surfaces of two objects to be welded, so that under pressure, the surfaces of the two objects rub against each other to fuse molecular layers.

The resistance welding refers to a method of welding by using strong current to pass through a contact point between an electrode and a workpiece and generating heat by a contact resistance.

The magnetic induction welding means that two workpieces to be welded are subjected to instantaneous high-speed collision under the action of a strong pulse magnetic field, and the atoms of two materials meet within an inter-atomic distance under the action of highpressure-waves on the surfaces of the materials, thereby forming a stable metallurgical bond on the interface. The magnetic induction welding is a kind of solid-state cold welding, and may weld conductive metals which have similar or dissimilar properties.

The arc welding is to convert electric energy into heat energy and mechanical energy required for welding by using an electric arc as a heat source and the physical phenomenon of air discharge, so as to connect metals. The arc welding mainly includes shielded metal arc welding, submerged arc welding, shielded arc welding, etc.

The pressure welding is a method of applying a pressure to the workpieces to be welded to make joint faces closely contact and produce a degree of plastic deformation to complete the welding.

The electron beam welding is to use accelerated and focused electron beams to bombard welding faces placed in vacuum or non-vacuum, so that the workpieces to be welded can be melted to realize welding.

The laser welding is an efficient and precise welding method using a laser beam with a high energy density as a heat source.

The friction welding refers to a method of welding by taking heat generated by the friction between contact faces of workpieces as a heat source to plastically deform the workpieces under pressure.

In the threaded connection, the supporting elastic sheet 3 and the terminal body 21 or the elastic sheet 22 have threaded structures respectively, and can be screwed together or connected together using separate studs and nuts. The threaded connection has the advantage of detachability, and assembly and disassembly can be carried out repeatedly, which is suitable for applications needing disassembly frequently.

The crimping is a production process in which the supporting elastic sheet 3 is assembled with the terminal body 21 or the elastic sheet 22, and then stamped into a whole using a crimping machine. The crimping has the advantage of mass production, and by adopting interlocking terminals and an automatic crimping machine, products with a stable quality may be rapidly manufactured in large quantities.

The clamping means that the supporting elastic sheet 3 is clamped with the terminal body 21 and the terminal body 21 or the elastic sheet 22 using parts such as a clip. The clamping has the advantages that complex devices are not required, and a connection may be achieved by means of a tool, which is suitable for applications such as repair and maintenance.

The splicing means that the supporting elastic sheet 3 and the terminal body 21 (or the elastic sheet 22) are provided with a corresponding groove and protrusion, respectively, and an assembly is made by connecting the groove and the protrusion by means of joggling or splicing. The splicing has the advantages of stable connection and detachability.

In some embodiments, an outer peripheral maximum diameter of the supporting elastic sheet 3 in a normal state is greater than or equal to a maximum diameter of the cavity 11.

In some embodiments, the supporting elastic sheet 3 is in contact with the inner peripheral wall of the cavity 11 and applies a pressure of 0.5 N to 100 N thereto. If the supporting elastic sheet 3 is only in contact with the inner peripheral wall of the cavity 11 without applying a pressure thereto, after the mating plug-in terminal and the charging terminal 2 are plugged and assembled, the mating plug-in terminal shakes under an external force, which causes the charging terminal 2 to be deviated, and an elastic force from the supporting elastic sheet 3 after deformation cannot restore the charging terminal 2 to a centering position, so that the deviation cannot be eliminated and no rebound may be achieved till the deformation stress of the supporting elastic sheet 3 disappears. As a result, the charging terminal 2 is always in an eccentric state. The charging terminal 2 in the charging socket 1 and the mating plug-in terminal are not concentric, which leads to a small contact area and too high a contact resistance therebetween, so that the temperature rise between the terminals is excessive, and accidents such as fire and combustion may occur in severe cases.

When the pressure applied by the supporting elastic sheet 3 to the inner peripheral wall of the cavity 11 is too small, there are still the phenomena that the charging terminal 2 is eccentric, the contact area between the charging terminal 2 in the charging socket 1 and the mating plug-in terminal is small, and the contact resistance is too high. When the pressure applied by the supporting elastic sheet 3 to the inner peripheral wall of the cavity 11 is too large, the charging terminal 2 is fixed in the center of the cavity 11, which is difficult to cause a deviation, so that when mating plug-in terminals with different eccentricities are assembled, a mating plug-in terminal with a large eccentricity cannot be plugged.

In order to verify the influence of the pressure applied by the supporting elastic sheet 3 to the inner peripheral wall of the cavity 11 on the contact resistance and the plugging and unplugging conditions of the mating plug-in terminal with a large eccentricity after plugging, the inventor selects the charging socket 1 and the charging terminal 2 with the same size, and different pressures applied by supporting elastic sheets 3 to the inner peripheral wall of the cavity 11. Then, the inventor selects the mating plug-in terminal with the same eccentricity to be plugged with the charging terminal 2, and tests the contact resistance between the terminals which have been plugged as well as the plugging success rate of the mating plug-in terminal in multiple plugging and unplugging experiments. The test results are shown in Table 7.

The test method of the contact resistance is to adopt a micro-resistance measuring instrument, and one end of a measuring end of the micro-resistance measuring instrument is placed on the mating plug-in terminal and the other end of the measuring end is placed on the charging terminal 2, with the same position for each measurement, and then read the value of the contact resistance on the micro-resistance measuring instrument. In this embodiment, the contact resistance greater than 1 mQ is unqualified.

The test method of the plugging success rate refers to that each kind of charging terminals 2 of different pressures applied to the inner peripheral wall of the cavity 11 by the supporting elastic sheets 3 is plugged with 100 mating plug-in terminals with the same eccentricity, record the number of successful one-time plugging, take a ratio of the above number to a total number of plugging and multiply the ratio by 100%. In this embodiment, the plugging success rate less than 95% is unqualified.

**Table 7: Influence of different pressures on the contact resistance and the plugging success rate**

| Pressure applied by the supporting elastic sheet to the inner peripheral wall of the cavity (N) | | | | | | | | | | | |
|---|---|---|---|---|---|---|---|---|---|---|---|
| 0.1 | 0.3 | 0.5 | 1 | 5 | 15 | 35 | 55 | 80 | 100 | 110 | 120 |

| Contact resistance between the mating plug-in terminal and the charging terminal (mΩ) | | | | | | | | | | | |
|---|---|---|---|---|---|---|---|---|---|---|---|
| 1.21 | 1.03 | 0.98 | 0.90 | 0.88 | 0.84 | 0.81 | 0.77 | 0.72 | 0.68 | 0.63 | 0.58 |

| Plugging success rate of the mating plug-in terminal and the charging terminal (%) | | | | | | | | | | | |
|---|---|---|---|---|---|---|---|---|---|---|---|
| 100 | 100 | 100 | 100 | 100 | 100 | 100 | 99 | 97 | 95 | 92 | 89 |

As can be seen from Table 7, when the pressure applied by the supporting elastic sheet 3 to the inner peripheral wall of the cavity 11 is less than 0.5 N, although the plugging success rate is qualified, the contact resistance between the mating plug-in terminal and the charging terminal 2 is greater than 1 mQ, which is too large. When the pressure applied by the supporting elastic sheet 3 to the inner peripheral wall of the cavity 11 is greater than 100 N, the plugging success rate is less than 95%, which cannot meet the application requirement. Therefore, the inventor sets the pressure applied by the supporting elastic sheet 3 to the inner peripheral wall of the cavity 11 as 0.5 N to 100 N.

In some embodiments, the material of the elastic sheet 22 and/or the supporting elastic sheet 3 includes a tellurium-copper alloy, so that the charging terminal 2 has good electrical conductivity and machinability, thereby ensuring the electrical performance and improving the processability.

Further, a tellurium content in the tellurium-copper alloy is 0.1% to 5%, which ensures the electrical conductivity, and the elasticity of the tellurium-copper alloy is also excellent.

In order to verify the influence of the tellurium content in the tellurium-copper alloy in the material of the elastic sheet 22 and/or the supporting elastic sheet 3 on the electrical conductivity at the plugging position of the charging terminal 2 and the mating plug-in terminal, the inventor selects 10 charging terminals 2 with the same shape and the same size, and the number of the supporting elastic sheets 3 in each of the charging terminals 2 is equal. The elastic sheet 22 and the supporting elastic sheet 3 are both made of the tellurium-copper alloy, in which the tellurium content accounts for 0.05%, 0.1%, 0.2%, 0.5%, 0.8%, 1.2%, 2%, 3%, 5%, 6% and 7% respectively. After the plugged structure in which the charging terminal 2 and the mating plug-in terminal are plugged is electrified, the electrical conductivity at the corresponding plugging position is detected. In this embodiment, the electrical conductivity greater than 99% is an ideal value, and the test results are shown in Table 8.

**Table 8: Influence of the tellurium-copper alloy with different tellurium contents on the conductivity**

| Tellurium-copper alloy with different tellurium contents (%) | | | | | | | | | | |
|---|---|---|---|---|---|---|---|---|---|---|
| 0.05 | 0.1 | 0.2 | 0.5 | 0.8 | 1.2 | 2 | 3 | 5 | 6 | 7 |

| Electrical conductivity at the plugging position of the charging terminal 2 and the mating plug-in terminal (%) | | | | | | | | | | |
|---|---|---|---|---|---|---|---|---|---|---|
| 98.4 | 99.2 | 99.6 | 99.7 | 99.8 | 99.7 | 99.5 | 99.5 | 99.1 | 98.9 | 98.6 |

As can be seen from Table 8, when the tellurium content is less than 0.1% or greater than 5%, the electrical conductivity decreases significantly, which cannot meet the ideal value of the electrical conductivity. When the tellurium content is greater than or equal to 0.2% and less than or equal to 1.2%, the electrical conductivity is the best. When the tellurium content is greater than 1.2% and less than or equal to 5%, although the electrical conductivity meets the ideal value, the trend is to gradually decrease and the electrical conductivity also decreases. Therefore, the inventor selects the tellurium-copper alloy with the tellurium content of 0.1% to 5%.

In some embodiments, the material of the elastic sheet 22 and/or the supporting elastic sheet 3 includes a beryllium-copper alloy, and a beryllium content in the beryllium-copper alloy is 0.05% to 5%. The material of the elastic sheet 22 and/or the supporting elastic sheet 3 includes beryllium, so that the material of the elastic sheet 22 and/or the supporting elastic sheet 3 has high hardness, elastic limit, fatigue limit and abrasion resistance, as well as good corrosion resistance, thermal conductivity and electrical conductivity, without generating sparks when being impacted.

In order to verify the influence of the beryllium content in the beryllium-copper alloy in the material of the elastic sheet 22 and/or the supporting elastic sheet 3 on the electrical conductivity of the plugging position of the charging terminal 2 and the mating plug-in terminal, the inventor selects 10 charging terminals 2 with the same shape and the same size, and the number of the supporting elastic sheets 3 in each of the charging terminals 2 is equal. Both the elastic sheet 22 and the supporting elastic sheet 3 include beryllium, in which the tellurium content accounts for 0.03%, 0.05%, 0.1%, 0.2%, 1%, 1.8%, 3%, 3.5%, 5% and 6% respectively. After the plugged structure in which the charging terminal 2 and the mating plug-in terminal are plugged is electrified, the electrical conductivity at the corresponding plugging position is detected. In this embodiment, the electrical conductivity greater than 99% is an ideal value, and the test results are shown in Table 9.

**Table 9: Influence of different beryllium contents on the electrical conductivity**

| Beryllium-copper alloy with different beryllium contents (%) | | | | | | | | | |
|---|---|---|---|---|---|---|---|---|---|
| 0.03 | 0.05 | 0.1 | 0.2 | 1 | 1.8 | 3 | 3.5 | 5 | 6 |

| Electrical conductivity at the plugging position of the charging terminal 2 and the mating plug-in terminal (%) | | | | | | | | | |
|---|---|---|---|---|---|---|---|---|---|
| 98.9 | 99.2 | 99.5 | 99.6 | 99.8 | 99.6 | 99.3 | 99.2 | 99.1 | 98.7 |

As can be seen from Table 9, when the beryllium content is less than 0.05% or greater than 5%, the electrical conductivity decreases significantly, which cannot meet the actual demand. When the beryllium content is greater than or equal to 0.1% and less than or equal to 3.5%, the electrical conductivity is the best. Therefore, the inventor selects the material of the elastic sheet 22 and/or the supporting elastic sheet 3 with the beryllium content of 0.05% to 5%. The beryllium-copper alloy with the beryllium content of 0.1% to 3.5% is selected in the most ideal case.

In an exemplary embodiment, the material of the elastic sheet 22 and/or the supporting elastic sheet 3 includes a phosphor-bronze alloy, in which a phosphor content is 0.01% to 1.5%. The phosphor bronze has the advantages of better corrosion resistance and abrasion resistance, which can ensure a good contact between the charging terminal 2 and the supporting elastic sheet 3, a good elasticity and an excellent machinability, thereby quickly shortening the machining time of parts.

In order to verify the influence of the phosphor content in the phosphor-bronze alloy in the material of the elastic sheet 22 and/or the supporting elastic sheet 3 on the electrical conductivity of the plugging position of the charging terminal 2 and the mating plug-in terminal, the inventor selects 10 charging terminals 2 with the same shape and the same size, and the number of the supporting elastic sheets 3 in each of the charging terminals 2 is equal. Both the elastic sheet 22 and the supporting elastic sheet 3 include phosphor, in which the phosphor content accounts for 0.001%, 0.005%, 0.01%, 0.05%, 0.1%, 0.5%, 1%, 1.5%, 2% and 2.5% respectively. After the plugged structure in which the charging terminal 2 and the mating plug-in terminal are plugged is electrified, the electrical conductivity at the corresponding plugging position is detected. In this embodiment, the electrical conductivity greater than 99% is an ideal value, and the test results are shown in Table 10.

**Table 10: Influence of different phosphor contents on the electrical conductivity**

| Phosphor-bronze alloy with different phosphor contents (%) | | | | | | | | | |
|---|---|---|---|---|---|---|---|---|---|
| 0.001 | 0.005 | 0.01 | 0.05 | 0.1 | 0.5 | 1 | 1.5 | 2 | 2.5 |

| Electrical conductivity at the plugging position of the charging terminal 2 and the mating plug-in terminal (%) | | | | | | | | | |
|---|---|---|---|---|---|---|---|---|---|
| 98.6 | 98.9 | 99.2 | 99.6 | 99.8 | 99.6 | 99.3 | 99.2 | 98.8 | 98.3 |

As can be seen from Table 10, when the phosphor content is less than 0.01% or greater than 1.5%, the electrical conductivity decreases significantly, which cannot meet the actual demand. When the phosphor content is greater than or equal to 0.05% and less than or equal to 0.5%, the electrical conductivity is the best. Therefore, the inventor selects the phosphor-bronze alloy with the phosphor content of 0.01% to 1.5%. In the most ideal case, the phosphor-bronze alloy with the phosphor content of 0.05% to 0.5% is selected.

In an exemplary embodiment, the material of the elastic sheet 22 and/or the supporting elastic sheet 3 includes a lead-brass alloy, in which a lead content is 0.1% to 5%. The lead-brass alloy has the advantages of high strength, compact and uniform structure, good corrosion resistance and excellent machining properties such as cutting and drilling.

In order to verify the influence of the lead content in the lead-brass alloy in the material of the elastic sheet 22 and/or the supporting elastic sheet 3 on the electrical conductivity of the plugging position of the charging terminal 2 and the mating plug-in terminal, the inventor selects 10 charging terminals 2 with the same shape and the same size, and the number of the supporting elastic sheets 3 in each of the charging terminals 2 is equal. Both the elastic sheet 22 and the supporting elastic sheet 3 include lead, in which the lead content accounts for 0.05%, 0.5%, 1%, 2%, 3%, 4%, 5%, 6% and 7% respectively. After the plugged structure in which the charging terminal 2 and the mating plug-in terminal are plugged is electrified, the electrical conductivity at the corresponding plugging position is detected. In this embodiment, the electrical conductivity greater than 99% is an ideal value, and the test results are shown in Table 10.

**Table 11: Influence of different lead contents on the electrical conductivity**

| Lead-brass alloys with different lead contents (%) | | | | | | | | | |
|---|---|---|---|---|---|---|---|---|---|
| 0.05 | 0.1 | 0.5 | 1 | 2 | 3 | 4 | 5 | 6 | 7 |

| Electrical conductivity of the mating plug-in part 2 (%) | | | | | | | | | |
|---|---|---|---|---|---|---|---|---|---|
| 98.6 | 99.2 | 99.3 | 99.6 | 99.8 | 99.6 | 99.3 | 99.1 | 98.8 | 98.3 |

As can be seen from Table 11, when the lead content is less than 0.1% or greater than 5%, the electrical conductivity decreases significantly, which cannot meet the actual demand. When the lead content is greater than or equal to 1% and less than or equal to 3%, the electrical conductivity is the best. Therefore, the inventor selects the lead-brass alloy with the lead content of 0.1% to 5%. In the most ideal case, the lead-brass alloy with the lead content of 1% to 3% is selected.

In some embodiments, the copper contents in the materials of the supporting elastic sheet 3 and the charging terminal 2 are inconsistent. The main purpose of the supporting elastic sheet 3 is to apply a pressure to the charging terminal 2 or the inner peripheral wall of the cavity 11, so the copper content of the supporting elastic sheet 3 mainly increases the elasticity of the supporting elastic sheet 3 itself and the abrasion resistance of the charging terminal 2 or the inner peripheral wall of the cavity 11 during friction. The charging terminal 2 mainly functions to conduct current after the plugging with the mating plug-in terminal, so the copper content of the charging terminal 2 mainly increases the electrical conductivity of the charging terminal 2 and the scratch resistance during plugging with the mating plug-in terminal. Therefore, the inventor sets that the copper contents in the materials of the supporting elastic sheet 3 and the charging terminal 2 are inconsistent.

In some embodiments, the elastic sheet 22 and/or the supporting elastic sheet 3 is at least partially provided with a plating layer to improve the corrosion resistance and the electrical conductivity, increase the number of times of plugging, and better prolong the service life of the plugged structure. The plating layer may entirely or partially cover the surface of the elastic sheet 22 and/or the supporting elastic sheet 3.

In an exemplary embodiment, the material of the plating layer on the elastic sheet 22 is inconsistent with the material of the plating layer on the supporting elastic sheet 3. The purpose of disposing the plating layers on the elastic sheet and the supporting elastic sheet is to prolong the service lives of the elastic sheet and the supporting elastic sheet, because the elastic sheet 22 and the supporting elastic sheet 3 are susceptible to a contact corrosion and a fretting corrosion respectively in the actual working environment.

The contact corrosion is also called a galvanic corrosion, which is an electrochemical corrosion caused by two different metals in contact with each other while in an electrolyte. Because the two metals constitute a spontaneous battery, the more active metal used as an anode is corroded. The charging terminal and the mating plug-in terminal are in contact for a long time, and the contact corrosion is easy to occur. Therefore, an inactive material is selected for the plating layer, and although the inactive material is often slightly expensive, the electrochemical corrosion resistance is strong.

The fretting corrosion is a form of fretting wear in which corrosion plays an important role. Under normal circumstances, the loss of the corrosion-resistant material caused by the corrosion is very small, but under the condition of fretting corrosion, the protective film formed on the surface of corrosion-resistant material is scraped off due to the mechanical action of the fretting friction, and a new metal with a strong chemical activity is exposed on the surface. The new metal reacts with the surrounding medium to regenerate a surface film with a thickness according to a certain law, and then is scraped off by the mechanical action, and so on. As a result, a large amount of the material is lost from the surface by the mechanical action and the corrosion. According to the principle of the fretting corrosion, a material with certain hardness should be selected for the plating layer on the supporting elastic sheet. Only the plating layer with high hardness may resist the repeated fretting friction during fretting and avoid the exposure of the body of the supporting elastic sheet. Therefore, according to the different characteristics of the charging terminal and the supporting elastic sheet, the inventor selects that the material of the plating layer on the charging terminal is inconsistent with the material of the plating layer on the supporting elastic sheet.

In an exemplary embodiment, the thickness of the plating layer on the elastic sheet 22 is inconsistent with the thickness of the plating layer on the supporting elastic sheet 3. A ratio of the thickness of the plating layer on the elastic sheet 22 to the thickness of the plating layer on the supporting elastic sheet 3 is greater than or equal to 3%. The thicknesses of different plating layers may be selected as required, such as according to the combinations of the thicknesses of the plating layers which can better save the cost, or the combinations with better abrasion resistance, or the combinations most suitable for the actual working environment after comprehensively considering various factors. In addition, when the thicknesses of the plating layers are inconsistent, the corrosion path of an external corrosion may be changed from a linear corrosion in the case of consistent thicknesses to an oblique corrosion in the case of inconsistent thicknesses, which increases the distance of the corrosion path of the external corrosion, thereby better protecting the internal base material and prolonging the service lives of the elastic sheet 22 and the supporting elastic sheet 3.

In order to verify the influence of a ratio of the thickness of the plating layer on the elastic sheet 22 to the thickness of the plating layer on the supporting elastic sheet 3 on the abrasion resistance of the charging terminal 2, the inventor adopts samples of charging terminals 2 with same specification and material, and different ratios of the thickness of the plating layer on the elastic sheet 22 to the thickness of the plating layer on the supporting elastic sheet 3, and carries out a series of tests on the number of times of plugging and unplugging and the corrosion resistance time by using the charging sockets 1 of the same specification. The experimental results are shown in Table 11.

The number of times of plugging and unplugging in Table 12 is obtained as follows: the charging terminals 2 are fixed on an experimental platform respectively; a mechanical device is used to simulate the plugging and unplugging of the mating plug-in terminal; after every 100 times of plugging and unplugging, it is necessary to stop and observe the damage of the plating layer on the surface of each charging terminal 2; if the plating layer on the surface of the terminal is scraped and the material of the terminal itself is exposed, the experiment is stopped, and then the number of times of plugging and unplugging at that time is recorded. In this embodiment, when the number of times of plugging and unplugging is less than 8000, it is considered as unqualified.

The test on the corrosion resistance time in Table 12 is to put the charging terminal 2 into a salt spray test chamber, spray salt fog for each position on the charging terminal 2, take out and clean the charging terminal 2 every 20 hours to observe the surface corrosion, which is a cycle, stop the test when a corrosion area of the surface of the charging terminal 2 is more than 10% of a total area thereof, and then record the number of cycles at that time. In this embodiment, when the number of cycles is less than 80, it is considered as unqualified.

**Table 12: Influences of different ratios of the thickness of the plating layer on the elastic sheet 22 to the thickness of the plating layer on the supporting elastic sheet 3 on the number of times of plugging and unplugging and the corrosion resistance of terminal**

| Ratio of the thickness of the plating layer on the elastic sheet 22 to the thickness of the plating layer on the supporting elastic sheet 3 (%) | | | | | | | | | | | | |
|---|---|---|---|---|---|---|---|---|---|---|---|---|
| 1.5 | 2 | 2.5 | 3 | 3.5 | 4 | 4.5 | 5 | 5.5 | 6 | 6.5 | 7 | 7.5 |

| Number of times of plugging and unplugging | | | | | | | | | | | | |
|---|---|---|---|---|---|---|---|---|---|---|---|---|
| 6900 | 7300 | 7600 | 10600 | 11500 | 11800 | 12000 | 9000 | 92000 | 11100 | 12000 | 10000 | 8500 |

| Number of cycles of corrosion resistance tests | | | | | | | | | | | | |
|---|---|---|---|---|---|---|---|---|---|---|---|---|
| 60 | 66 | 78 | 130 | 124 | 125 | 132 | 105 | 90 | 110 | 120 | 112 | 98 |

As can be seen from Table 12, when the ratio of the thickness of the plating layer on the elastic sheet 22 to the thickness of the plating layer on the supporting elastic sheet 3 is less than 3%, both the number of times of plugging and unplugging and the number of cycles of corrosion resistance tests for the charging terminal 2 are unqualified, and the plating layers are easy to be damaged at this time, which degrades the electrical performance of the charging terminal. When the ratio of the thickness of the plating layer on the elastic sheet 22 to the thickness of the plating layer on the supporting elastic sheet 3 is greater than or equal to 3%, both the number of times of plugging and unplugging and the number of cycles of corrosion resistance tests for the charging terminal 2 meet the experimental requirements. Therefore, the inventor selects that the ratio of the thickness of the plating layer on the elastic sheet 22 to the thickness of the plating layer on the supporting elastic sheet 3 is greater than or equal to 3%.

In some embodiments, the outer peripheral wall of the charging terminal 2 is provided with a plating layer, and the material of the plating layer on the outer peripheral wall of the charging terminal 2 is inconsistent with the material of the plating layer on the surface of the supporting elastic sheet 3. The purpose of disposing the plating layers on the outer peripheral wall of the charging terminal 2 and the supporting elastic sheet 3 is to prolong the service lives of the elastic sheet and the supporting elastic sheet 3, because the outer peripheral wall of the charging terminal 2 and the supporting elastic sheet 3 are susceptible to a contact corrosion and a fretting corrosion respectively in the actual working environment.

The contact corrosion is also called a galvanic corrosion, which is an electrochemical corrosion caused by two different metals in contact with each other while in an electrolyte. Because the two metals constitute a spontaneous battery, the more active metal used as an anode is corroded. The charging terminal and the mating plug-in terminal are in contact for a long time, and the contact corrosion is easy to occur. Therefore, an inactive material is selected for the plating layer, and although the inactive material is often slightly expensive, the electrochemical corrosion resistance is strong.

The fretting corrosion is a form of fretting wear in which corrosion plays an important role. Under normal circumstances, the loss of the corrosion-resistant material caused by the corrosion is very small, but under the condition of fretting corrosion, the protective film formed on the surface of corrosion-resistant material is scraped off due to the mechanical action of the fretting friction, and a new metal with a strong chemical activity is exposed on the surface. The new metal reacts with the surrounding medium to regenerate a surface film with a thickness according to a certain law, and then is scraped off by the mechanical action, and so on. As a result, a large amount of the material is lost from the surface by the mechanical action and the corrosion. According to the principle of the fretting corrosion, a material with certain hardness should be selected for the plating layer on the supporting elastic sheet. Only the plating layer with high hardness may resist the repeated fretting friction during fretting and avoid the exposure of the body of the supporting elastic sheet. Therefore, according to the different characteristics of the elastic sheet and the supporting elastic sheet, the inventor selects that the material of the plating layer on the elastic sheet is inconsistent with the material of the plating layer on the supporting elastic sheet.

In some embodiments, the outer peripheral wall of the charging terminal 2 is provided with a plating layer, and the thickness of the plating layer on the outer peripheral wall of the charging terminal 2 is inconsistent with the thickness of the plating layer on the surface of the supporting elastic sheet 3. The thicknesses of different plating layers may be selected as required, such as according to the combinations of the thicknesses of the plating layers which can better save the cost, or the combinations with better abrasion resistance, or the combinations most suitable for the actual working environment after comprehensively considering various factors. In addition, when the thicknesses of the plating layers are inconsistent, the corrosion path of an external corrosion may be changed from a linear corrosion in the case of consistent thicknesses to an oblique corrosion in the case of inconsistent thicknesses, which increases the distance of the corrosion path of the external corrosion, thereby better protecting the internal base material and prolonging the service lives of the elastic sheet 22 and the supporting elastic sheet 3.

In some embodiments, the copper contents in the materials of the supporting elastic sheet 3 and the elastic sheet 22 are inconsistent. The main purpose of the supporting elastic sheet 3 is to apply a pressure to the charging terminal 2 or the inner peripheral wall of the cavity 11, so the copper content of the supporting elastic sheet 3 mainly increases the elasticity of the supporting elastic sheet 3 itself and the abrasion resistance of the charging terminal 2 or the inner peripheral wall of the cavity 11 during friction. The elastic sheet 22 mainly functions to conduct current after the plugging with the mating plug-in terminal, so the copper content of the elastic sheet 22 mainly increases the electrical conductivity of the elastic sheet 22 and the scratch resistance during plugging with the mating plug-in terminal. Therefore, the inventor sets that the copper contents in the materials of the supporting elastic sheet 3 and the charging terminal 2 are inconsistent.

In some embodiments, the material of the plating layer includes one or more selected from nickel, cadmium, manganese, zirconium, cobalt, tin, titanium, chromium, gold, silver, zinc, tin-lead alloy, silver-antimony alloy, palladium, palladium-nickel alloy, graphite silver, graphene silver, hard silver and silver-gold-zirconium alloy.

As an active metal, copper will react with oxygen and water during use, so one or more inactive metals are needed as the plating layer to prolong the service life of the charging terminal 2. In addition, for a metal contact point subjected to plugging and unplugging frequently, a metal with good abrasion resistance is also needed as the plating layer, thereby greatly prolonging the service life of the contact point. Moreover, the contact point requires good electrical conductivity, and the above metals have better electrical conductivity and stability than copper or copper alloy, so that the charging terminal 2 may obtain a better electrical performance and a longer service life.

In order to verify the influence of different materials of the plating layer on the overall performance of the terminal, the inventor adopts samples of the charging terminals 2 with the same specification and material, and having plating layers of different materials, and carries out a series of tests on the number of times of plugging and unplugging and the corrosion resistance time by using the charging sockets 1 of the same specification. In order to prove the advantages and disadvantages of the selected materials and other conventional electroplating materials, the inventor also selects tin, nickel and zinc as the materials of the plating layers for the experiment. The experimental results are shown in Table 13.

The number of times of plugging and unplugging in Table 13 is obtained as follows: the charging terminals 2 are fixed on an experimental platform respectively; a mechanical device is used to simulate the plugging and unplugging of the mating plug-in terminal; after every 100 times of plugging and unplugging, it is necessary to stop and observe the damage of the plating layer on the surface of each charging terminal 2; if the plating layer on the surface of the terminal is scraped and the material of the terminal itself is exposed, the experiment is stopped, and then the number of times of plugging and unplugging at that time is recorded. In this embodiment, when the number of times of plugging and unplugging is less than 8000, it is considered as unqualified.

The test on the corrosion resistance time in Table 13 is to put the charging terminal 2 into a salt spray test chamber, spray salt fog for each position on the charging terminal 2, take out and clean the charging terminal 2 every 20 hours to observe the surface corrosion, which is a cycle, stop the test when a corrosion area of the surface of the charging terminal 2 is more than 10% of a total area thereof, and then record the number of cycles at that time. In this embodiment, when the number of cycles is less than 80, it is considered as unqualified.

**Table 13: Influences of different materials of the plating layer on the number of times of plugging and unplugging and the corrosion resistance of the terminal**

| Different materials of the plating layer | | | | | | | | | |
|---|---|---|---|---|---|---|---|---|---|
| Nickel | Cadmium | Manganese | Zirconium | Cobalt | Tin | Titanium | Zinc | Chrome | |

| Number of times of plugging and unplugging | | | | | | | | | |
|---|---|---|---|---|---|---|---|---|---|
| 8300 | 9500 | 11000 | 9200 | 10800 | 8500 | 10600 | 11500 | 9700 | |

| Number of cycles of corrosion resistance tests | | | | | | | | | |
|---|---|---|---|---|---|---|---|---|---|
| 89 | 126 | 122 | 130 | 126 | 84 | 125 | 82 | 108 | |
| | | | | | | | | | |

| Different materials of the plating layer | | | | | | | | | |
|---|---|---|---|---|---|---|---|---|---|
| Gold | Silver | Silver-antimony alloy | Graphite silver | Graphene silver | Silver-gold-zirconium alloy | Palladium | Palladium-nickel alloy | Tin-lead alloy | Hard silver |
| Number of times of plugging and unplugging | | | | | | | | | |
| 12400 | 11800 | 12200 | 12000 | 12500 | 12000 | 11100 | 12000 | 10000 | 11500 |

| Number of cycles of corrosion resistance tests | | | | | | | | | |
|---|---|---|---|---|---|---|---|---|---|
| 135 | 128 | 125 | 133 | 126 | 134 | 117 | 125 | 119 | 135 |

As can be seen from Table 13, when the material of the plating layer is selected from gold, silver, silver-antimony alloy, palladium, palladium-nickel alloy, graphite silver, graphene silver, hard silver and silver-gold-zirconium alloy, the experimental results far exceed the standard values and the performances are stable. When the material of the plating layer is selected from nickel, tin, tin-lead alloy and zinc, the experimental results can also meet the requirements. Therefore, the inventor sets that the material of the plating layer is one or more selected from gold, silver, nickel, tin, tin-lead alloy, zinc, silver-antimony alloy, palladium, palladium-nickel alloy, graphite silver, graphene silver, hard silver and silver-gold-zirconium alloy.

In some embodiments, the plating layer is disposed by means of electroplating, electroless plating, magnetron sputtering or vacuum plating.

The electroplating is a process of plating a thin layer of other metal or alloy on a surface of a metal by using the principle of electrolysis.

The electroless plating is a deposition process in which a metal is produced through a controllable oxidation-reduction reaction under a metal catalytic action.

The magnetron sputtering is to use an interaction of a magnetic field and an electric field to make electrons move spirally near a target surface, thereby increasing the probability that the electrons bombard argon to generate ions. The generated ions bombard the target surface under the action of the electric field so as to sputter a target material.

The vacuum plating is to deposit various metal film and non-metal film on the surface of a part by means of distillation or sputtering under vacuum conditions.

In an exemplary embodiment, the plating layer includes a bottom layer and a surface layer. The plating layer is formed using a multi-layer plating method. After the supporting elastic sheet 3 is processed, there are still many cracks and holes under a surface micro-interface. These cracks and holes are the main reasons for abrasion and corrosion of the supporting elastic sheet 3 during use. In this embodiment, a bottom layer is firstly plated on the surface of the supporting elastic sheet 3 to fill the cracks and holes therein, so that the surface of the supporting elastic sheet 3 is smooth and free of the above defects, and then a surface layer is plated, so that the binding is firmer and smoother and the surface of the plating layer has no cracks or holes. As a result, the abrasion resistance, the corrosion resistance and the electrical performance of the charging terminal 2 become better, and the service life of the charging terminal 2 is greatly prolonged.

The material of the bottom layer includes one or more selected from gold, silver, nickel, tin, tin-lead alloy and zinc; and the material of the surface layer may include one or more selected from gold, silver, nickel, tin, tin-lead alloy, silver-antimony alloy, palladium, palladium-nickel alloy, graphite silver, graphene silver and silver-gold-zirconium alloy.

In another embodiment, a thickness of the bottom layer is 0.01 µm to 12 µm. Exemplarily, the thickness of the bottom layer is 0.1 µm to 9 µm.

In another embodiment, a thickness of the surface layer is 0.5 µm to 50 µm. Exemplarily, the thickness of the surface layer is 1 µm to 35 µm.

In order to verify the influence of the change of the thickness of the bottom layer of the plating layer on the overall performance of the charging terminal 2, the inventor adopts charging terminals 2 with the same specification and material, and having the nickel-plated bottom layers of different thicknesses and the silver-plated surface layers of the same thickness, and carries out a series of tests on the temperature rise and the corrosion resistance time by using the mating plug-in terminals of the same specification. The experimental results are shown in Table 14.

The test on the temperature rise in Table 14 is to supply the same power to the charging terminal 2 and the mating plug-in terminal which have been plugged, detect the temperatures of the plugged structure at the same position before the power supply and after the temperature is stable in a closed environment, and take a difference therebetween to obtain an absolute value. In this embodiment, the temperature rise greater than 50K is unqualified.

The test on the corrosion resistance time in Table 14 is to put the charging terminal 2 into a salt spray test chamber, spray salt fog for each position on the mating plug-in terminal, take out and clean the terminal every 20 hours to observe the surface corrosions thereof, which is a cycle, stop the test when a corrosion area of the surface of the terminal is more than 10% of a total area thereof, and then record the number of cycles at that time. In this embodiment, when the number of cycles is less than 80, it is considered as unqualified.

**Table 14: Influence of different thicknesses of the bottom layer of the plating layer on the temperature rise and the corrosion resistance**

| Different thicknesses of the nickel-plated bottom layer (µm) | | | | | | | | | | | | | |
|---|---|---|---|---|---|---|---|---|---|---|---|---|---|
| 0.001 | 0.005 | | 0.01 | | 0.05 | 0.1 | 0.5 | | 1 | | 3 | | 5 |

| Temperature rise of the plugged structure (k) | | | | | | | | | | | | | |
|---|---|---|---|---|---|---|---|---|---|---|---|---|---|
| 10.0 | 12.2 | | 14.9 | | 16.1 | 18.2 | 21.7 | | 24.4 | | 26.6 | | 28.6 |

| Number of cycles of corrosion resistance tests | | | | | | | | | | | | | |
|---|---|---|---|---|---|---|---|---|---|---|---|---|---|
| 68 | 78 | | 84 | | 93 | 103 | 109 | | 113 | | 115 | | 120 |

| Different thicknesses of the nickel-plated bottom layer (µm) | | | | | | | | | | | | | |
|---|---|---|---|---|---|---|---|---|---|---|---|---|---|
| 6 | | 9 | | 10 | | 11 | | 12 | | 13 | | 15 | |

| Temperature rise of the plugged structure (k) | | | | | | | | | | | | | |
|---|---|---|---|---|---|---|---|---|---|---|---|---|---|
| 31.1 | | 35.7 | | 40.1 | | 43.5 | | 44.8 | | 56.3 | | 60.4 | |

| Number of cycles of corrosion resistance tests | | | | | | | | | | | | | |
|---|---|---|---|---|---|---|---|---|---|---|---|---|---|
| 122 | | 128 | | 128 | | 130 | | 130 | | 129 | | 127 | |

As can be seen from Table 14, although the temperature rise of the plugged structure is qualified when the thickness of the nickel-plated bottom layer is less than 0.01 µm, the number of cycles of corrosion resistance tests of the charging terminal 2 is less than 80 since the bottom layer is too thin, and the performance requirements of the terminal cannot be met, which greatly affects the overall performance and the service life of the plugged structure, and causes the product life to be reduced sharply or even failure combustion accidents in severe cases. When the thickness of the nickel-plated bottom layer is greater than 12 µm, the heat generated by the plugged structure cannot be radiated since the bottom layer is thick, which makes the temperature rise of the plugged structure unqualified, and the thick plating layer is easy to fall off the surface, resulting in a decrease in the number of cycles of corrosion resistance tests. Thus, the inventor selects the thickness of the bottom layer to be 0.01 µm to 12 µm.

Exemplarily, the inventor finds that the comprehensive effect of the temperature rise and the corrosion resistance of the plugged structure is better when the thickness of the bottom layer of the plating layer is 0.1 µm to 9 µm. Therefore, in order to further improve the safety, reliability and practicability of the product itself, it is exemplary that the thickness of the bottom layer of the plating layer is 0.1 µm to 9 µm.

In order to verify the influence of the change of the thickness of the surface layer of the plating layer on the overall performance of the plugged structure, the inventor adopts samples of the charging terminals 2 with the same specification and material, and having the nickel-plated bottom layers of the same thickness and the silver-plated surface layers of different thicknesses, and carries out a series of tests on the temperature rise and the corrosion resistance time by using the mating plug-in terminals of the same specification. The experimental method is the same as that described above, and the experimental results are shown in Table 15.

**Table 15: Influence of different thicknesses of the surface layer of the plating layer on the temperature rise and the corrosion resistance**

| Different thicknesses of the silver-plated surface layer (µm) | | | | | | | | |
|---|---|---|---|---|---|---|---|---|
| 0.1 | 0.5 | 1 | 1.5 | 5 | 10 | 15 | 20 | 25 |

| Temperature rise of the plugged structure (k) | | | | | | | | |
|---|---|---|---|---|---|---|---|---|
| 11.4 | 13.8 | 15.2 | 17.5 | 21.8 | 23.7 | 25.4 | 28.6 | 31.5 |

| Number of cycles of corrosion resistance tests | | | | | | | | |
|---|---|---|---|---|---|---|---|---|
| 75 | 81 | 91 | 93 | 95 | 97 | 98 | 102 | 105 |

| Different thicknesses of the silver-plated surface layer (µm) | | | | | | | | |
|---|---|---|---|---|---|---|---|---|
| 30 | 35 | 40 | 45 | 50 | 55 | 60 | 65 | |

| Temperature rise of the plugged structure (k) | | | | | | | | |
|---|---|---|---|---|---|---|---|---|
| 35.6 | 39 | 42.5 | 45.4 | 48.2 | 52.5 | 53.8 | 69.3 | |

| Number of cycles of corrosion resistance tests | | | | | | | | |
|---|---|---|---|---|---|---|---|---|
| 111 | 112 | 116 | 117 | 122 | 125 | 124 | 121 | |

As can be seen from Table 15, although the temperature rise of the plugged structure is qualified when the thickness of the silver-plated surface layer is less than 0.5 µm, the number of cycles of corrosion resistance tests of the charging terminal 2 is less than 80 since the surface layer is too thin, and the performance requirements of the charging terminal 2 cannot be met, which greatly affects the overall performance and the service life of the plugged structure, and causes the product life to be reduced sharply or even failure combustion accidents in severer cases. When the thickness of the silver-plated surface layer is greater than 50 µm, the heat generated by the terminal cannot be radiated since the surface layer is thick, which makes the temperature rise unqualified, and the thick plating layer is easy to fall off the surface of the terminal, resulting in a decrease in the number of cycles of corrosion resistance tests. Moreover, since the surface layer is made of precious metal, the thick plating layer does not improve the performance and hence has no use value. Therefore, the inventor selects the thickness of the silver-plated surface layer to be 0.1 µm to 50 µm. Exemplarily, the inventor finds that the comprehensive effect of the temperature rise and the corrosion resistance of the plugged structure is better when the thickness of the surface layer of the plating layer is 1 µm to 35 µm. Therefore, in order to further improve the safety, reliability and practicability of the product itself, it is exemplary that the thickness of the surface layer of the plating layer is 1 µm to 35 µm.

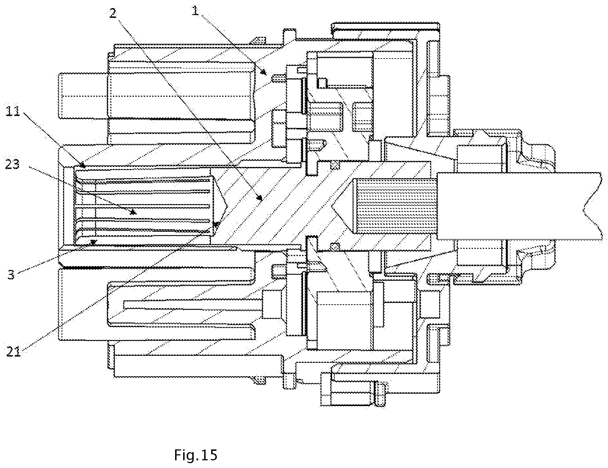

The present disclosure further provides a motor vehicle, which includes the charging socket for high-precision centering of the terminal as illustrated in FIG. 15.

Those described above are only a few embodiments of the present disclosure, and those skilled in the art may make various modifications or variations to the embodiments of the present disclosure according to the disclosure of the application document without departing from the spirit and scope of the present disclosure.

## Claims

1. A charging socket for high-precision centering of terminal, wherein the charging socket is provided with a cavity for accommodating a charging terminal, a gap is provided between an inner peripheral wall of the cavity and an outer peripheral wall of the charging terminal, a supporting elastic sheet is disposed in the gap, and the supporting elastic sheet is provided in a peripheral direction of the charging terminal and configured to restrict an axis of the charging terminal from deviating from an axis of the cavity.

2. The charging socket according to claim 1, wherein a ratio of a maximum width of the gap to a maximum diameter of the charging terminal is in a range from 0.01 to 0.7.

3. The charging socket according to claim 1, wherein the supporting elastic sheet is shaped as a straight-line segment, one end of which is connected to the inner peripheral wall of the cavity, and the other end of which is connected to the charging terminal.

4. The charging socket according to claim 1, wherein the supporting elastic sheet is shaped as an arc segment, one end of which is connected to the inner peripheral wall of the cavity or the charging terminal, and a tangent part of the arc segment is connected to the charging terminal or the inner peripheral wall of the cavity.

5. The charging socket according to claim 1, wherein the supporting elastic sheet is shaped as a curved segment, one end of which is connected to the inner peripheral wall of the cavity or the charging terminal, and the other end of which is connected to the charging terminal or the inner peripheral wall of the cavity.

6. The charging socket according to claim 1, wherein both ends of the supporting elastic sheet are connected to the inner peripheral wall of the cavity or the charging terminal, and a middle part of the supporting elastic sheet protrudes and is connected to the charging terminal or the inner peripheral wall of the cavity.

7. The charging socket according to claim 1, wherein a cross-sectional of the supporting elastic sheet in a radial direction of the charging terminal is circular or elliptical or polygonal or flat or E-shaped or F-shaped or H-shaped or K-shaped or L-shaped or T-shaped or U-shaped or V-shaped or W-shaped or X-shaped or Y-shaped or Z-shaped or semi-arc-shaped or arc-shaped or wavy.

8. The charging socket according to claim 1, wherein the number of the supporting elastic sheets is at least three.

9. The charging socket according to claim 8, wherein the supporting elastic sheets are uniformly provided in the peripheral direction of the charging terminal.

10. The charging socket according to claim 1, wherein the supporting elastic sheet is provided on the inner peripheral wall of the cavity by one or more manners selected from ultrasonic welding, laser welding, electron beam welding, hot-pressing welding, threaded connection, crimping, clamping, splicing and adhesion.

11. The charging socket according to claim 1, wherein an inner peripheral minimum diameter of the supporting elastic sheet in a normal state is less than or equal to a minimum outer diameter of the charging terminal.

12. The charging socket according to claim 1, wherein the supporting elastic sheet is in contact with the charging terminal and applies a pressure of 0.5 N to 95 N to the charging terminal.

13. The charging socket according to claim 1, wherein a groove is disposed on an outer periphery of the supporting elastic sheet, and the charging socket further comprises an elastic sleeve configured to sleeve the groove.

14. The charging socket according to claim 13, wherein the elastic sleeve is an elastic rubber ring or a spring ring.

15. The charging socket according to claim 1, wherein the supporting elastic sheet is integrally formed with the charging terminal.

16. The charging socket according to claim 1, wherein the supporting elastic sheet is disposed on the charging terminal by one or more manners selected from resistance welding, friction welding, ultrasonic welding, arc welding, laser welding, electron beam welding, pressure diffusion welding, magnetic induction welding, threaded connection, crimping, clamping, splicing and adhesion.

17. The charging socket according to claim 1, wherein an outer peripheral maximum diameter of the supporting elastic sheet in a normal state is greater than or equal to a maximum inner diameter of the cavity.

18. The charging socket according to claim 1, wherein the supporting elastic sheet is in contact with the inner peripheral wall of the cavity and applies a pressure of 0.5 N to 100 N to the inner peripheral wall of the cavity.

19. The charging socket according to claim 1, wherein the charging socket further comprises a circular ring, wherein the circular ring sleeves the supporting elastic sheet, and the circular ring forms an abutting portion together with the supporting elastic sheet and is fixed to an inner wall of the cavity.

20. The charging socket according to claim 19, wherein a ratio of a length from the abutting portion to an end of the supporting elastic sheet away from the charging terminal to a length from the abutting portion to an end of the supporting elastic sheet abutted against the charging terminal is 0.3 to 1.5.

21. The charging socket according to claim 1, wherein a material of the supporting elastic sheet or the charging terminal comprises a tellurium copper alloy, in which a tellurium content is 0.1% to 5%.

22. The charging socket according to claim 1, wherein a material of the supporting elastic sheet or the charging terminal comprises a beryllium-copper alloy, in which a beryllium content is 0.05% to 5%.

23. The charging socket according to claim 1, wherein a material of the supporting elastic sheet or the charging terminal comprises a phosphor-bronze alloy, in which a phosphor content is 0.01% to 1.5%.

24. The charging socket according to claim 1, wherein a material of the supporting elastic sheet or the charging terminal comprises a lead-brass alloy, in which a lead content is 0.1% to 5%.

25. The charging socket according to claim 1, wherein copper contents in materials of the supporting elastic sheet and the charging terminal are inconsistent.

26. The charging socket according to claim 1, wherein the charging terminal comprises a terminal body and a plurality of elastic sheets disposed on an end face of the terminal body at intervals in the peripheral direction, and a plugging hole is formed in the middle of the plurality of elastic sheets.

27. The charging socket according to claim 26, wherein an inner-hole cross-sectional area of the plugging hole on a side close to the terminal body is greater than an inner-hole cross-sectional area of the plugging hole on a side away from the terminal body.

28. The charging socket according to claim 26, wherein a thickness of the elastic sheet on a side of an opening of the plugging hole is greater than or equal to a thickness of the elastic sheet on a side close to the terminal body.

29. The charging socket according to claim 26, wherein a ratio of a peripheral maximum width of the supporting elastic sheet to a maximum peripheral width of the elastic sheet is 0.1 to 1.6.

30. The charging socket according to claim 26, wherein the supporting elastic sheet is disposed on the inner peripheral wall of the cavity, and an inner peripheral minimum diameter of the supporting elastic sheet in a normal state is less than or equal to a minimum outer diameter of the elastic sheet.

31. The charging socket according to claim 26, wherein the supporting elastic sheet is in contact with the elastic sheet and applies a pressure of 0.5 N to 95 N to the elastic sheet.

32. The charging socket according to claim 26, wherein the supporting elastic sheets are disposed on the end face of the terminal body and provided at intervals in the middle of the elastic sheets, and a maximum outer diameter of the supporting elastic sheet in a normal state is greater than or equal to a maximum outer diameter of the inner peripheral wall of the cavity.

33. The charging socket according to claim 26, wherein one end of the supporting elastic sheet is disposed on an outer periphery of the elastic sheet, and the other end of the supporting elastic sheet is in contact with the inner peripheral wall of the cavity, and a maximum outer diameter of the supporting elastic sheet in a normal state is greater than or equal to a maximum outer diameter of the inner peripheral wall of the cavity.

34. The charging socket according to claim 26, wherein both ends of the supporting elastic sheet are disposed on an outer periphery of the elastic sheet, a middle part of the supporting elastic sheet protrudes and contacts the inner peripheral wall of the cavity, and a maximum outer diameter of the supporting elastic sheet in a normal state is greater than or equal to a maximum outer diameter of the inner peripheral wall of the cavity.

35. The charging socket according to any one of claims 32 to 34, wherein the supporting elastic sheet is in contact with the inner peripheral wall of the cavity and applies a pressure of 0.5 N to 100 N to the inner peripheral wall of the cavity.

36. The charging socket according to any one of claims 32 to 34, wherein the supporting elastic sheet is disposed on the elastic sheet by one or more manners selected from resistance welding, friction welding, ultrasonic welding, arc welding, laser welding, electron beam welding, pressure diffusion welding, magnetic induction welding, threaded connection, crimping, clamping, splicing and adhesion.

37. The charging socket according to claim 26, wherein a material of the elastic sheet comprises a tellurium copper alloy, in which a tellurium content is 0.1% to 5%.

38. The charging socket according to claim 26, wherein a material of the elastic sheet comprises a beryllium-copper alloy, in which a beryllium content is 0.05% to 5%.

39. The charging socket according to claim 26, wherein a material of the elastic sheet comprises a phosphor-bronze alloy, in which a phosphor content is 0.01% to 1.5%.

40. The charging socket according to claim 26, wherein a material of the elastic sheet comprises a lead-brass alloy, in which a lead content is 0.1% to 5%.

41. The charging socket according to claim 26, wherein copper contents in the materials of the supporting elastic sheet and the elastic sheet are inconsistent.

42. The charging socket according to claim 26, wherein the elastic sheet and/or the supporting elastic sheet is at least partially provided with a plating layer.

43. The charging socket according to claim 42, wherein a material of the plating layer on the elastic sheet is inconsistent with a material of the plating layer on the supporting elastic sheet.

44. The charging socket according to claim 42, wherein a thickness of the plating layer on the elastic sheet is inconsistent with a thickness of the plating layer on the supporting elastic sheet, and a ratio of the thickness of the plating layer on the elastic sheet to the thickness of the plating layer on the supporting elastic sheet is greater than or equal to 3%.

45. The charging socket according to claim 1, wherein the outer peripheral wall of the charging terminal and/or a surface of the supporting elastic sheet is at least partially provided with a plating layer.

46. The charging socket according to claim 45, wherein a material of the plating layer on the outer peripheral wall of the charging terminal is inconsistent with a material of the plating layer on the surface of the supporting elastic sheet.

47. The charging socket according to claim 45, wherein a thickness of the plating layer on the outer peripheral wall of the charging terminal is inconsistent with a thickness of the plating layer of the surface of the supporting elastic sheet.

48. The charging socket according to any one of claims 42 to 47, wherein a material of the plating layer comprises one or more selected from nickel, cadmium, manganese, zirconium, cobalt, tin, titanium, chromium, gold, silver, zinc, tin-lead alloy, silver-antimony alloy, palladium, palladium-nickel alloy, graphite silver, graphene silver, hard silver and silver-gold-zirconium alloy.

49. The charging socket according to any one of claims 42 to 47, wherein the plating layer is disposed by means of electroplating, electroless plating, magnetron sputtering or vacuum plating.

50. The charging socket according to any one of claims 42 to 47, wherein the plating layer comprises a bottom layer and a surface layer.

51. A motor vehicle, comprising the charging socket for high-precision centering of terminal according to any one of claims 1 to 50.
